# EUROPÄISCHE PATENTSCHRIFT

(11) **EP 3 996 962 B1**
(45) Veröffentlichungstag und Bekanntmachung des Hinweises auf die Patenterteilung: **06.09.2023**
(21) Anmeldenummer: 20739945.2
(22) Anmeldetag: 09.07.2020
(51) Int. Cl.: B60T 13/38, B60T 13/68, B60T 15/04

(54) **PARKBREMSEINRICHTUNG**
PARKING BRAKE DEVICE
DISPOSITIF DE FREINAGE DE STATIONNEMENT

(30) Priorität: 12.07.2019 DE 102019118896
(43) Veröffentlichungstag der Anmeldung: 18.05.2022
(73) Patentinhaber: KNORR-BREMSE Systeme für Nutzfahrzeuge GmbH, 80809 München (DE)
(72) Erfinder: SCHNITTGER, Karsten, 80935 München (DE); MICHALSKI, Max, 85579 Neubiberg (DE)
(86) Internationale Anmeldenummer: PCT/EP2020/069423
(87) Internationale Veröffentlichungsnummer: WO 2021/009011

(56) Entgegenhaltungen:
- EP-A1- 1 504 975
- DE-A1-102015 119 135
- DE-A1-102017 007 781

## Beschreibung

Die vorliegende Erfindung betrifft eine Parkbremseinrichtung für ein Nutzfahrzeug mit wenigstens einer ersten Anschlussleitung an eine Druckluftquelle und wenigstens einer zweiten Anschlussleitung an eine Druckluftquelle.

Aus dem Stand der Technik sind bereits Parkbremseinrichtungen für Nutzfahrzeuge bekannt. Im Zusammenhang mit Nutzfahrzeugen werden pneumatische Bremssysteme benutzt, mit denen die Federspeicherbremszylinder eines Nutzfahrzeugs, aber auch das Bremssystem eines Anhängers benutzt werden können.

Aus dem Stand der Technik sind bereits Bremssysteme bekannt. So offenbart die DE 10 2015 107 125 A1 eine Vorrichtung zum Steuern einer Bremsanlage für ein Nutzfahrzeug mit einem Parkbremssteuerventil zum Bereitstellen einer Parkbremsfunktion für das Nutzfahrzeug und einem Anhängersteuerventil zum Bereitstellen einer Feststellbremsfunktion und einer Funktion des elektrischen Bremsens für den Anhänger.

Die DE 10 2016 117 836 A1 offenbart eine Luftaufbereitungseinheit für eine Bremsanlage eines Nutzfahrzeuges. Die Luftaufbereitungseinheit umfasst ein Fußbremsmodulanschluss zum pneumatischen Koppeln der Luftaufbereitungseinheit mit einem Fußbremsmodul der Bremsanlage, zumindest eine Ventileinheit zum Beaufschlagen des Fußbremsmodulanschlusses und einem Steuerdruck- und einem Steuergerät zum Ansteuern der Ventileinheit.

Die DE 10 2016 117 837 A1 betrifft eine Luftaufbereitungseinheit für eine Bremsanlage eines Nutzfahrzeugs. Die Luftaufbereitungseinheit umfasst einen Steuerventilanschluss zum pneumatischen Koppeln der Luftaufbereitungseinheit mit zumindest einem Radbremszylinder der Bremsanlage vorgeschalteten Steuerventil zum Ändern eines Bremsdrucks im Radbremszylinder, ein Beaufschlagungsventil zum Aufschlagen des Steuerventilanschlusses mit einem Solldruck und ein Steuergerät zum Ansteuern des Beaufschlagungsventils.

Die DE 10 2017 102 074 A1 betrifft ein Schnittstellenelement für ein Fahrzeug umfassend elektronische Komponenten, wobei die elektronischen Komponenten wenigstens einen Anschluss an wenigstens eine Datenschnittstelle eines Nutzfahrzeuges aufweisen, wobei der Anschluss geeignet und beschaffen ist zum Austausch von Messdaten und/oder Steuerungs- und/oder Regelungsdaten zur Regelung von elektronischen Komponenten, wobei die elektronischen Komponenten weiter wenigstens eine integrierte Mess- und/oder Steuerungs- und/oder Regelungseinheit aufweisen.

Die WO 2016/177475 A1 betrifft eine Vorrichtung zum Steuern einer Bremsanlage für ein Nutzfahrzeug und eine Bremsanlage.

Die EP 2 794 368 B1 betrifft ein elektronisch gesteuertes pneumatisches Bremssystem für ein Automobil und ein Automobil mit einem solchen System.

Weiter zeigt die DE 10 2014 112 015 A1 ein Verfahren zum Steuern einer durch eine elektropneumatische Betriebsbremsventileinrichtung betätigten elektropneumatischen Betriebsbremseinrichtung, insbesondere eines elektronischen Bremssystems eines Fahrzeugs, wobei die elektropneumatische Betriebsbremsventileinrichtung ein Betriebsbremsbetätigungsorgan sowie innerhalb wenigstens eines elektrischen Betriebsbremskreises der elektropneumatischen Betriebsbremseinrichtung wenigstens einen elektrischen Kanal mit wenigstens einem vom Betriebsbremsbetätigungsorgan durch aufgrund einer Fahrerbremsanforderung betätigbaren elektrischen Bremswertgeber zum betätigungsabhängigen Aussteuern von Betätigungssignalen und mit wenigstens einer die Betätigungssignale empfangenden elektronischen Steuereinrichtung aufweist.

Die DE 10 2014 013 756 B3 offenbart eine elektrische Ausrüstung eines Fahrzeugs mit einer wenigstens teilweise elektrischen Brems- und Lenkeinrichtung beinhaltend eine elektrischen oder elektro-mechanische Lenkeinrichtung mit oder ohne durchgehende mechanische Verbindung zwischen einem Lenkrad und einem Lenkgetriebe sowie mit einer elektronischen Lenksteuereinrichtung und einem elektrischen Lenksteller, und eine Betriebsbremseinrichtung, die als Betriebsbremseinrichtung eine elektropneumatische Betriebsbremseinrichtung, insbesondere ein elektronisches oder elektronisch bremsdruckgeregeltes Bremssystem vorgesehen ist, welches eine elektropneumatische Betriebsbremsventileinrichtung, eine elektronische Bremssteuereinrichtung, elektropneumatische Modulatoren sowie pneumatische Radbremsaktuatoren beinhaltet.

Die WO 2018/054645 A1 zeigt eine Luftaufbereitungseinheit für eine Bremsanlage eines Nutzfahrzeugs und auf ein Verfahren zum Betreiben einer Luftaufbereitungseinheit, wobei das Nutzfahrzeug eine mittels eines elektronischen Bremssystems automatisch steuerbare Bremsanlage aufweisen kann. Bei Ausfall des elektronischen Bremssystems kann die automatische Steuerung der Bremsanlage beispielsweise durch eine redundante Steuerelektronik mit separater Stromversorgung aufrechterhalten werden.

Die DE 10 2008 009 043 B3 zeigt ferner ein elektronisch geregeltes Bremssystem eines für den Anhängerbetrieb vorgesehenen Zugfahrzeugs, welches mindestens einen ersten elektrischen Bremssteuerkreis und einen zweiten elektrischen Bremssteuerkreis umfasst. Die Erfindung sieht vor, dass in einem Zugfahrzeug ohnehin vorhandene Komponenten wie beispielsweise ein Anhängersteuermodul oder ein Parkbremsmodul für eine Druckmittelsteuerung von Bremsaktuatoren eingesetzt werden, welche von einem gestörten elektrischen Bremskreis nicht mehr angesteuert werden können.

Aus der EP 1 504 975 A1 ist eine druckmittelbetriebene Bremsanlage für ein Fahrzeug bekannt.

Bestehende Systeme, aber auch neue Bremssysteme für Nutzfahrzeuge sollen im Hinblick auf zukünftig teilautonom oder autonom fahrende Lastkraftwagen nachgerüstet bzw. weiterentwickelt werden. Hierfür sind Änderungen am Bremssystem erforderlich.

Es ist die Aufgabe der vorliegenden Erfindung, eine Parkbremseinrichtung der eingangs genannten Art in vorteilhafter Weise weiterzubilden, insbesondere dahingehend, dass die Möglichkeit die Anforderungen von teilautonom oder autonom fahrenden Lastkraftwagen erfüllt werden können.

Diese Aufgabe wird erfindungsgemäß gelöst durch eine Parkbremseinrichtung mit den Merkmalen des Anspruchs 1. Danach ist vorgesehen, dass eine Parkbremseinrichtung mit wenigstens einer ersten Anschlussleitung an eine Druckluftquelle und mit wenigstens einer zweiten Anschlussleitung an eine Druckluftquelle versehen ist, mit wenigstens einer ersten Druckluftausgangsleitung zum direkten und/oder indirekten Anschluss an einen Federspeicherbremszylinder, und mit wenigstens einer weiteren Redundanz-Druckluftausgangsleitung zum direkten und/oder indirekten Anschluss an ein redundantes Bremssystem.

Die Erfindung basiert auf dem Grundgedanken, dass ein bestehendes Bremssystem dahingehend modifiziert wird, dass es insbesondere für teilautonom oder autonom fahrende Nutzfahrzeuge geeignet ist. Hierzu wird insbesondere ein weiteres redundantes Bremssystem hinzugefügt, das beim Ausfall des ersten Bremssystems entsprechend übernehmen kann. Durch die Bereitstellung wenigstens zweier Druckluftanschlüsse wird es möglich, in jedem Fall einen weiteren Redundanz-Druckluftausgang bereitstellen zu können, so dass selbst bei Ausfall und/oder einer Störung eines bereits redundant ausgebildeten Bremssystems (z.B. insbesondere ein Betriebsbremssystem) mindestens eine weitere Redundanzebene vorhanden ist, die die Parkbremseinrichtung zum stufenlosen Bremsen nutzt. Für diese Funktion kann insbesondere der weitere Redundanz-Druckluftausgang bzw. -anschluss genutzt werden. Grundsätzlich ergeben sich als Vorteile eine Kostenreduzierung durch eine Systemintegration. Die Parkbremseinrichtung ermöglicht bereits heute eine vom normalen Bremssystem unabhängige Steuerelektronik, die bereits nach höchsten Sicherheitsanforderungen entwickelt wurde. Damit ist die Elektronik einer Parkbremseinrichtung (elektronische Parkbremse - EPB) einfach zur redundanten Steuereinheit für ein autonomes Fahren zu erweitern. In modulare EPB-Systeme kann auch beispielsweise eine Komponente, wie das Relais-Modul des elektronischen Parkmoduls einfach integriert werden.

Grundsätzlich denkbar ist, dass die Druckluftausgangsleitung und Redundanz-Druckluftausgangsleitung an unterschiedliche Ausgänge angeschlossen sind bzw. diese versorgen. Grundsätzlich ist aber auch denkbar, dass beispielsweise eine gemeinsame Versorgungsanschlussleitung (bzw. Versorgungsausgang) genutzt wird. In diesem Falle würden sowohl die Druckluftausgangsleitung und Redundanz-Druckluftausgangsleitung dieselbe Versorgungsanschlussleitung (bzw. Versorgungsausgang) versorgen.

Als redundantes Bremssystem ist beispielsweise auch zu verstehen, dass über die Redundanz-Druckluftausgangsleitung die regulären Betriebsbremszylinder, also die "eigentliche" Bremse des Fahrzeugs angesteuert werden, allerdings komplett unabhängig von der regulären Ansteuerung dieser Bremse. Denkbar ist aber auch, dass ein komplett redundantes Bremssystem aufgebaut wird, also beispielsweise durch zusätzliche Bremszylinder oder sonstige geeignete Bremssysteme.

Insbesondere ist mindestens in Zukunft ein redundantes Bremssystem inklusive Steuerelektronik erforderlich, das beim Ausfall eines Bremssystems notfalls übernehmen kann.

Grundsätzlich kann die elektronische Parkbremse (EPB) sowohl als separates Gerät ausgeführt sein oder in ein anderes Gerät integriert sein, wie beispielsweise ein Luftaufbereitungsgerät.

Das Relaisventil des EPM-Moduls kann in der EPB angeordnet sein oder aus einem oder mehreren externen Relaisventilen bestehen. Bei der Versorgung von EPB und EPM mit Druckluft kann entweder der gleiche Versorgungspfad oder ein unterschiedlicher Versorgungspfad genutzt werden. Fall das integrierte EPM-Modul aus einem anderen Pfad versorgt wird, bietet es sich hier an, ein höheres Druckniveau zu verwenden, als bei der EPB.

Des Weiteren kann vorgesehen sein, dass die Redundanz-Druckluftausgangsleitung über die zweite Anschlussleitung durch eine Druckluftquelle mit Druckluft versorgbar ist bzw. im Betriebszustand versorgt werden kann. Hierdurch wird sichergestellt, dass selbst bei Ausfall der ersten Druckluftquelle bzw. der ersten Versorgung mit Druckluft über die erste Anschlussleitung jedenfalls eine Bremsung und ein Betrieb durch die zweite Anschlussleitung an eine Druckluftquelle ermöglicht werden kann. Hierdurch wird insgesamt eine entsprechende Redundanz des Gesamtsystems ermöglicht.

Außerdem ist stromaufwärts der Redundanz-Druckluftausgangsleitung (bzw. des Redundanz-Druckluftausgangs) zur Steuerung der Redundanz-Druckluftausgangsleitung ein Relaisventil vorgesehen. Mittels des Bistabilventils kann in üblicher Form eine Ansteuerung des redundanten Bremssystems erfolgen.

Ferner ist das Relaisventil als Bistabilventil ausgebildet. Das Relaisventil bzw. Bistabilventil ermöglicht insbesondere eine schnelle und präzise Ansteuerung des redundanten Bremssystems in Antwort eines darin eingesteuerten Steuerdruckes.

Das Relaisventil weist einen pneumatischen Steuereingang auf. Mittels des pneumatischen Steuereingangs ist eine einfache und zuverlässige Ansteuerung durch das pneumatische System der Parkbremseinrichtung möglich. Grundsätzlich ist aber auch denkbar, dass alternativ und/oder zusätzlich eine elektronische Ansteuerung des Relaisventils ermöglicht ist.

Der pneumatische Steuereingang weist eine Zuleitung auf, in der wenigstens ein Steuerventil vorgesehen ist. Mittels des wenigstens einen Steuerventils kann eine Ansteuerung erfolgen. Dabei sind grundsätzlich jegliche Arten von Steuerventilen denkbar. Bei dem Steuerventil kann es sich um ein Magnetventil handeln.

Insbesondere kann vorgesehen sein, dass das Steuerventil ein 2/2-Wege-Ventil ist. Grundsätzlich ist aber auch denkbar, dass jegliche andere Art an Steuerventilen möglich ist. Denkbar sind 3/2-Wege-Ventile, 4/2-Wege-Ventile oder auch Bistabilventile. Dies ist aber nicht zwingend erforderlich.

Zwischen dem Steuerventil und dem Steuereingang zweigt eine Entlüftungsleitung ab. Über die Entlüftungsleitung kann die Ansteuerung des pneumatischen Steuereingangs entsprechend drucklos gestellt und der dort befindliche Steuerdruck abgelassen werden.

In der Entlüftungsleitung selbst kann ein weiteres Steuerventil vorgesehen sein. Hierdurch können weitere Ansteuerungsmöglichkeiten erreicht werden.

Insbesondere kann das weitere Steuerventil an einen Luftablass angeschlossen und/oder ein Luftablassventil sein.

Außerdem kann vorgesehen sein, dass zwischen Steuerventil und Steuereingang ein 3/2-Wege-Ventil vorgesehen ist, dessen eine Ausgangsleitung mit einem Steuereingang verbunden ist und dessen andere Ausgangsleitung mit einem Steuereingang eines Bistabilventils verbunden ist. Hierdurch wird eine Ansteuerung eines weiteren Systems ermöglicht.

Die Parkbremseinrichtung kann wenigstens einen weiteren Druckluftausgang zum Anschluss an ein Anhängersteuermodul und/oder zum Anschluss an wenigstens einen Federspeicherbremszylinder eines Anhängers aufweisen.

Des Weiteren kann vorgesehen sein, dass stromaufwärts des weiteren Druckluftausgangs zum Anschluss an ein Anhängersteuermodul und/oder zum Anschluss an wenigstens einen Federspeicherbremszylinder eines Anhängers ein Bistabilventil vorgesehen ist.

Zudem ist denkbar, dass stromaufwärts des Steuerventils eine Steuerleitung abzweigt, in der das 3/2-Wege-Ventil angeordnet ist, welches mit einem pneumatischen Steuereingang eines dritten Steuerventils verbunden ist, das in der Redundanz-Ausgangsleitung angeordnet ist sowie mit einem pneumatischen Steuereingang eines vierten Steuerventils verbunden ist, das zwischen dem Bistabilventil und dem weiteren Druckluftausgang angeordnet ist. Diese Art der pneumatischen Verschaltung ermöglicht eine von den Steuerventilen des Anhänger-Bistabilventils bzw. Relaisventils unabhängige Ansteuerung der Bremsen des Anhängers sowie des redundanten Bremssystems. Hierdurch kann eine noch höhere Funktionssicherheit insgesamt gewährleistet werden.

Weitere Einzelheiten und Vorteile der Erfindung sollen nun anhand der in den Zeichnungen näher dargestellten Ausführungsbeispielen erläutert werden.

Es zeigen:
- Fig. 1a: ein erstes Ausführungsbeispiel einer erfindungsgemäßen Parkbremseinrichtung;
- Fig. 1b: das erste Ausführungsbeispiel der erfindungsgemäßen Parkbremseinrichtung in einer weiteren Darstellung;
- Fig. 2: ein zweites Ausführungsbeispiel einer erfindungsgemäßen Parkbremseinrichtung;
- Fig. 3: ein drittes Ausführungsbeispiel einer erfindungsgemäßen Parkbremseinrichtung;
- Fig. 4: ein viertes Ausführungsbeispiel einer erfindungsgemäßen Parkbremseinrichtung;
- Fig. 5: ein fünftes Ausführungsbeispiel einer erfindungsgemäßen Parkbremseinrichtung;
- Fig. 6: ein sechstes Ausführungsbeispiel einer erfindungsgemäßen Parkbremseinrichtung;
- Fig. 7: ein siebtes Ausführungsbeispiel einer erfindungsgemäßen Parkbremseinrichtung;
- Fig. 8: ein achtes Ausführungsbeispiel einer erfindungsgemäßen Parkbremseinrichtung;
- Fig. 9: ein neuntes Ausführungsbeispiel einer erfindungsgemäßen Parkbremseinrichtung;
- Fig. 10: ein zehntes Ausführungsbeispiel einer erfindungsgemäßen Parkbremseinrichtung;
- Fig. 11: ein erstes Ausführungsbeispiel eines erfindungsgemäßen elektronischen Bremssystems mit einer erfindungsgemäßen Parkbremseinrichtung gemäß Fig. 7 bis 10;
- Fig. 12: ein zweites Ausführungsbeispiel eines erfindungsgemäßen elektronischen Bremssystems mit einer erfindungsgemäßen Parkbremseinrichtung gemäß Fig. 7 bis 10;
- Fig. 13: ein drittes Ausführungsbeispiel eines erfindungsgemäßen elektronischen Bremssystems mit einer erfindungsgemäßen Parkbremseinrichtung gemäß Fig. 7 bis 10;
- Fig. 14: ein viertes Ausführungsbeispiel eines erfindungsgemäßen elektronischen Bremssystems mit einer erfindungsgemäßen Parkbremseinrichtung gemäß Fig. 7 bis 10;
- Fig. 15: ein fünftes Ausführungsbeispiel eines erfindungsgemäßen elektronischen Bremssystems mit einer erfindungsgemäßen Parkbremseinrichtung gemäß Fig. 7 bis 10; und
- Fig. 16: ein sechstes Ausführungsbeispiel eines erfindungsgemäßen elektronischen Bremssystems mit einer erfindungsgemäßen Parkbremseinrichtung gemäß Fig. 7 bis 10.

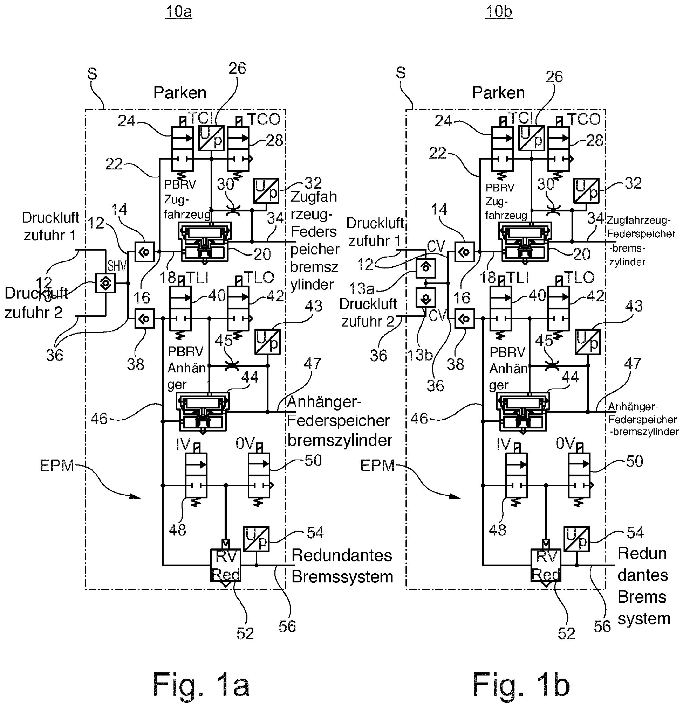

**Fig. 1a** zeigt in schematischer Darstellung ein erstes Ausführungsbeispiel einer erfindungsgemäßen Parkbremseinrichtung 10a.

Die Systemgrenze S der Parkbremseinrichtung 10a ist dabei mit einer gestrichelten Linie eingezeichnet.

Die Parkbremseinrichtung 10a weist eine erste Druckluftzufuhr 12 bzw. Anschlussleitung 12 und eine zweite Druckluftzufuhr 36 bzw. Anschlussleitung 36 auf.

Die erste und/oder zweite Druckluftzufuhr 12, 36 können/kann dabei beispielsweise an einem Kompressor angeordnet sein.

Alternativ oder zusätzlich kann vorgesehen sein, dass die erste und/oder zweite Druckluftzufuhr 12, 36 von einem entsprechenden Anschluss für eine Parkbremseinrichtung eines Mehrkreisschutzventils (nicht in Fig. 1a, 1b gezeigt) versorgt werden/wird.

Die erste und zweite Anschlussleitung 12, 36 vereinigen sich zunächst über ein Wechselventil 13 zu einer gemeinsamen Anschlussleitung zur Versorgung der Parkbremseinrichtung 10a mit Druckluft.

Das Wechselventil 13 ist als sogenanntes Select-High-Ventil 13 ausgestaltet.

Stromabwärts des Wechselventils 13 verzweigt sich die gemeinsame Anschlussleitung wieder zu der ersten und zweiten Anschlussleitung 12, 36.

In der ersten Anschlussleitung 12 ist ein erstes Rückschlagventil 14 angeordnet und in der zweiten Anschlussleitung 36 ist ein zweites Rückschlagventil 38 angeordnet.

Stromabwärts des Rückschlagventils 14 ist ein erster Abzweigungspunkt 16 vorgesehen, bei dem die Leitung 18 zum Bistabilventil 20 abzweigt.

Darüber hinaus zweigt hier die Steuerleitung 22 zu den Steuerventilen 24 (TCI) und 28 (TCO) ab. Das Steuerventil 24 und das Steuerventil 28 sind dabei als 2/2-Wege-Magnetventil ausgebildet.

Zwischen den Ventilen 24 und 28 ist ein Drucksensor 26 vorgesehen.

Stromabwärts des Steuerventils 24 und stromaufwärts des Ventils 28 zweigt eine Steuerleitung zum Bistabilventil 20 für das Zugfahrzeug ab, mittels dessen die Ansteuerung des Bistabilventils 20 pneumatisch erfolgen kann.

Von dieser Steuerleitung zweigt weiter mit einer Drossel 30 eine weitere Leitung ab, die auch einen Drucksensor 32 aufweist. Diese Leitung wiederum führt zur Ausgangsleitung 34, die auch an den Ventilausgang des Bistabilventils 20 angeschlossen ist.

Die Druckluftzufuhr 12 stellt dabei die erste Anschlussleitung an eine Druckluftquelle dar.

Des Weiteren dient die zweite Anschlussleitung 36 zum Anschluss an eine weitere Druckluftquelle. Dabei kann es sich um eine von der ersten Druckluftquelle unabhängige Druckluftzufuhr handeln.

Denkbar ist jedoch auch, dass die erste und zweite Anschlussleitung 12, 36 mit einer gemeinsamen Druckluftquelle verbunden sind.

Stromabwärts des Rückschlagventils 38 ist eine Leitung 46 vorgesehen, von der Anschlussleitungen zu den Steuerventilen 40 und 42, sowie zum Bistabilventil 44 für den Anhänger bzw. Trailer, den Steuerventilen 48 und 50 für das Redundanz-Relaisventil 52 für den Anschluss 56 an das redundante Bremssystem vorgesehen sind.

Die Steuerventile 40 und 42 sind ebenfalls als 2/2-Wege-Magnetventile ausgebildet.

Zwischen dem Steuerventil 40 und dem Steuerventil 42 zweigt eine Steuerleitung zum Bistabilventil 44 für den Anhänger bzw. Trailer ab. Hier ist ebenfalls vergleichbar der Steuerleitung für das Bistabilventil 20 des Zugfahrzeugs stromaufwärts noch eine Abzweigung vorgesehen, die in einer Ausgangsleitung für den Anschluss 47 vorgesehen ist und wobei mittels dieser Leitung bzw. dieses Anschlusses 47 die Federspeicherbremszylinder des Anhängers mit dem Bistabilventil 20 verbunden sind. In dieser Abzweigung sind ein Drucksensor 43 und eine Drossel 45 vorgesehen.

Die Steuerventile 48 und 50 für das Redundanzrelaisventil 52 sind ebenfalls als 2/2-Wege-Magnetventile ausgeführt.

In der Anschlussleitung 56 für das redundante Bremssystem ist noch ein Drucksensor 54 vorgesehen.

Die Verschaltung der Steuerventile 48, 50, des Redundanzrelaisventils 52 und des Drucksensors 54 bildet eine funktionelle und strukturelle Baueinheit aus, die als elektro-pneumatischer Modulator EPM zum Einregeln eines Redundanzbremsdruckes an der Anschlussleitung 56 für das redundante Bremssystem ausgebildet ist.

Das redundante Bremssystem 68 ist insbesondere Bestandteil einer Betriebsbremseinrichtung eines Nutzfahrzeugs.

Der elektro-pneumatische Modulator EPM wird von der Leitung 46 mit Druckluft versorgt, die zwischen dem Rückschlagventil 38 und dem Magnet-Steuerventil 40 abgezweigt ist.

Durch den ersten Anschluss an eine Druckluftquelle 12 (= erste Anschlussleitung 12 an eine Druckluftquelle) und den zweiten Anschluss an eine Druckluftquelle 36 (= zweite Anschlussleitung an eine Druckluftquelle) ist eine redundante Druckluftversorgung möglich. Die Druckluftquellen können hier auch voneinander unabhängig sein.

Darüber hinaus kann bei Ausfall der ersten Druckluftquelle weiterhin durch das redundante Bremssystem eine Bremsung des Zugfahrzeugs, aber auch des Anhängers erfolgen.

**Fig. 1b** zeigt in einer weiteren schematischen Darstellung das erste Ausführungsbeispiel der Parkbremseinrichtung 10b, wobei sich das erste Ausführungsbeispiel aus Fig. 1a und 1b darin unterscheiden, dass das Wechselventil 13 aus Fig. 1a in Fig. 1b durch zwei funktionell gleichwirkende Rückschlagventile 13a, 13b ersetzt wurde.

Die Funktion des ersten Ausführungsbeispiels der Parkbremseinrichtung 10a, 10b gemäß Fig. 1a, 1b ist dabei wie folgt:
Zunächst wird aus vereinfachenden Gründen die Funktion der Parkbremseinrichtung 10a, 10b unter regulären Betriebsbedingungen, d.h. ohne Berücksichtigung des elektro-pneumatischen Modulators EPM, erläutert.

Der Steuereingang des Relaisventils 20 des Zugfahrzeugs kann mittels den beiden Magnet-Steuerventilen 24 und 28 je nach gewünschtem Parkzustand belüftet oder entlüftet werden, was ein Aktivieren oder Lösen der Federspeicherbremszylinder des Zugfahrzeugs zur Folge hat.

Zudem kann durch die Abzweigungsleitung, in der die Drossel 30 angeordnet ist, eine zusätzliche Verbindung zwischen dem Steuereingang und dem Ausgang des Relaisventils 20 erhalten werden, indem der Druck an dem Ausgang des Relaisventils 20 zu dem Steuereingang des Relaisventils zurückkoppelbar ist.

Mittels der Kombination aus Abzweigungsleitung und der darin vorgesehen Drossel 30 ist insbesondere ein Luftverlust im Zuge eines Schaltvorgangs zwischen verschiedenen Betriebsmodi der erfindungsgemäßen Parkbremseinrichtung verringerbar.

Ein Schaltvorgang zwischen den Betriebszuständen kann so schneller, effizienter und präziser erfolgen.

Insbesondere ist durch das Unterbinden eines Luftverlustes keine Nachregelung von Druckluft notwendig.

Gemäß Fig. 1a und 1b ist die pneumatische Verschaltung des Relaisventils 20 für das Zugfahrzeug mit den Steuerventilen 24, 28 entsprechend analog zu der pneumatischen Verschaltung des Relaisventils 44 für den Anhänger mit den Steuerventilen 40, 42 aufgebaut.

Daher gelten die vorstehenden funktionellen Erläuterungen auch für die Ansteuerung des Relaisventils 44 des Anhängers über dessen Steuerventile 40, 42 entsprechend.

Die jeweilige in den Fig. 1a, 1b gezeigte pneumatische Ansteuerung der beiden Relaisventile 20, 44 für Zugfahrzeug und Anhänger über die jeweilig zugeordneten Steuerventile 24, 28; 40, 42 erfolgt unabhängig zueinander.

Somit können das Zugfahrzeug und der Anhänger unabhängig voneinander angesteuert werden, was weitere Ansteuerungszustände wie einen Trailertest-Zustand im Stillstand oder ein Streckbrems-Zustand während der Fahrt ermöglicht.

Die nachfolgende Funktionsbeschreibung bezieht sich nun auf eine Störung der Parkbremseinrichtung 10a, 10b und/oder einer elektro-pneumatischen Betriebsbremseinrichtung (nicht in Fig. 1a, 1b gezeigt).

Eine derartige Störung liegt z.B. vor, wenn der erste oder der zweite erste Druckluftzufuhr 12, 36 bzw. Anschlussleitung 12, 36 eine Leckage oder eine Verstopfung oder eine sonstige Funktionsbeeinträchtigung aufweist.

In diesem Fall steht (sowohl in der Betriebsbremseinrichtung als auch) in der Parkbremseinrichtung 10a, 10b eine weitere Versorgungleitung bzw. Anschlussleitung 10a, 10b zur Verfügung, je nachdem welche der beiden Leitungen 12, 36 eine Störung aufweist.

Zusätzlich oder alternativ kann die Betriebsbremseinrichtung eine derartige Störung aufweisen, dass diese aufgrund von elektrischen und/oder pneumatischen Beeinträchtigungen teilweise oder komplett betriebsunfähig wird.

In diesem Fall bildet der in die Parkbremseinrichtung 10a, 10b integrierte elektro-pneumatische Modulator EPM ein redundantes Bremssystem aus, mittels dessen zumindest bei teilweisem Ausfall der Steuerungselektronik der Parkbremseinrichtung 10a, 10b noch immer die Funktionsweise ähnlich eines Relaisventils aufweist.

Dadurch kann der elektro-pneumatische Modulator EPM weiterhin die Betriebsbremszylinder und/oder die Parkbremszylinder aktivieren, was insbesondere im Zusammenhang mit den zukünftigen Sicherheitsanforderungen bei autonomem oder teilautonomem Fahren besonders wichtig ist.

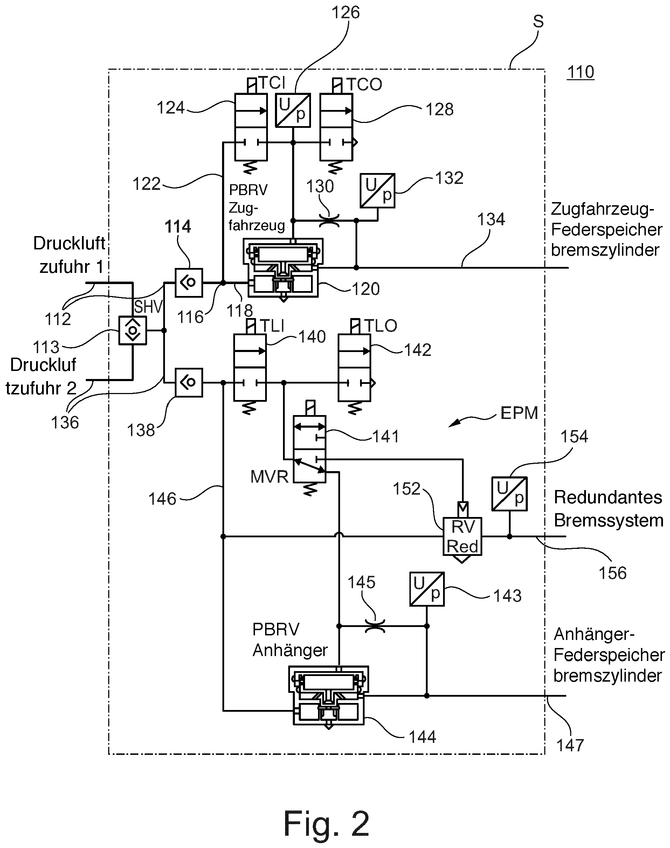

**Fig. 2** zeigt eine Parkbremseinrichtung 110 in einem zweiten Ausführungsbeispiel der Erfindung.

Die Parkbremseinrichtung 110 gemäß Fig. 2 weist im Wesentlichen die gleichen strukturellen und funktionalen Merkmale auf, wie auch das in Fig. 1a gezeigte Ausführungsbeispiel einer Parkbremseinrichtung 10a.

Gleiche oder ähnliche Merkmale oder Elemente sind mit demselben Bezugszeichen bezeichnet, das jedoch um den Wert 100 erhöht ist.

Es bestehen jedoch die folgenden Unterschiede in struktureller und/oder funktionaler Hinsicht:
Zur Ansteuerung des Redundanz-Relaisventils 152 werden nunmehr die Steuerventile 140 und 142 benutzt, die auch zur Ansteuerung des Bistabilventils 144 des Anhängers benutzt werden. Hierzu ist ein weiteres 3/2-Wege-Ventil in der Abzweigungsleitung nach dem Ventil 140 vorgesehen.

Das Steuerventil 141 (MVR) dient somit zur Ansteuerung sowohl des Bistabilventils 144 als auch zur Ansteuerung des Redundanz-Relaisventils 152.

Diese Ausführungsform weist den Vorteil auf, dass eine Doppelnutzung der Ventile TLI TLO 140, 142 ermöglicht wird. Hierdurch kann insgesamt ein einfacherer Aufbau in die Einsparung eines Magnet-Steuerventils 48, 50 (siehe Fig. 1a, 1b) erreicht werden.

Die Rückfallebene für eine von dem ersten Druckluftanschluss 112 unabhängige Bremsmöglichkeit mittels des redundanten Bremssystems, das am Anschluss 156 angeschlossen ist, ist ebenfalls gegeben.

Ansonsten ist die Funktionsweise des zweiten Ausführungsbeispiels im Wesentlichen gleich zum ersten Ausführungsbeispiel gemäß Fig. 1a, 1b.

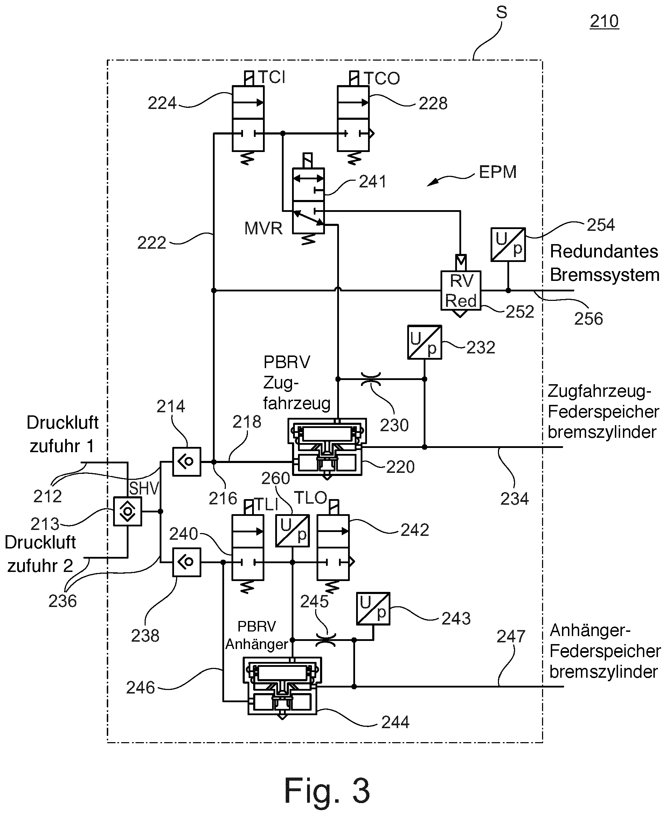

**Fig. 3** zeigt ein drittes Ausführungsbeispiel einer Parkbremseinrichtung 210, die im Wesentlichen die gleichen strukturellen und funktionalen Merkmale wie das in Fig. 1a gezeigte Ausführungsbeispiel der Parkbremseinrichtung 10a aufweist.

Vergleichbare Elemente oder Merkmale sind mit demselben Bezugszeichen gekennzeichnet, jedoch um den Wert 200 erhöht.

Hier ist jedoch die Ansteuerung des Redundanz-Relaisventils 252 mittels der Steuerventile 224 und 228 realisiert, die auch zur Ansteuerung des Bistabilventils bzw. Relaisventils 220 des Zugfahrzeugs dienen.

Vergleichbar der Lösung gemäß Fig. 2 wird hier ebenfalls zwischen die Ventile 224 und 228, die jeweils 2/2-Wege-Magnetventile sind, ein 3/2-Wege-Ventil (MVR) zwischengeschaltet, das sowohl zur Ansteuerung des Bistabilventils 220 für das Zugfahrzeug und des Redundanz-Relaisventils 252 verwendet werden kann.

Im Gegensatz zu Fig. 2 erfolgt hier jedoch die Zwischenschaltung des 3/2-Wege-Ventils zwischen die Steuerventile 224 und 228, die das Relaisventil 220 für das Zugfahrzeug ansteuern, und nicht (wie bei Fig. 2) zwischen die Steuerventile 240, 242 zur Ansteuerung des Anhängers, wobei die Funktionalität dennoch vergleichbar zu Fig. 2 ist.

Die Ausgestaltung und Ansteuerung des Relaisventils 244 für den Anhänger ist gleich wie im ersten Ausführungsbeispiel gemäß Fig. 1a, wobei zusätzlich zwischen den Steuerventilen 240, 242 ein Drucksensor 260 vorgesehen ist.

Auch die generelle Funktionsweise des dritten Ausführungsbeispiels der Parkbremseinrichtung 210 ist mit derjenigen aus Fig. 2 vergleichbar.

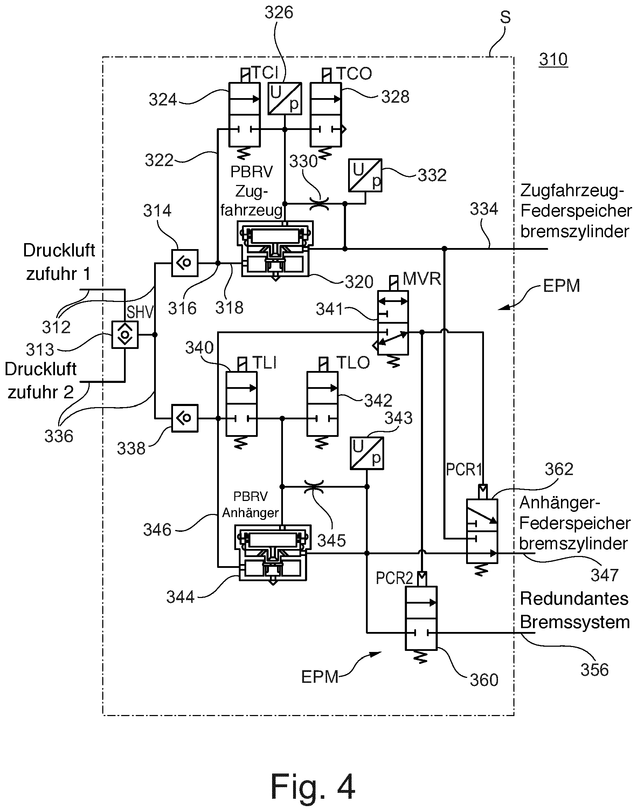

**Fig. 4** zeigt ein viertes Ausführungsbeispiel einer Parkbremseinrichtung 310, das ebenfalls im Wesentlichen die gleichen strukturellen und funktionalen Merkmale wie das in Fig. 1a gezeigte Ausführungsbeispiel aufweist.

Gleiche Elemente und Merkmale sind mit gleichen Bezugszeichen versehen, jedoch um den Wert 300 erhöht.

Es bestehen jedoch die folgenden Unterschiede:
Grundsätzlich ist die Ansteuerung des Bistabilventils 320 für die Federspeicherbremszylinder des Zugfahrzeugs sowie des Ventils 344 für die Ansteuerung des Anhängers gleich aufgebaut wie beim ersten Ausführungsbeispiel gemäß Fig. 1a.

Zusätzlich sind jedoch zur Ansteuerung des redundanten Bremssystems die Ventile 360 und 362 (PCR1, PCR2) vorgesehen.

Das Ventil 360 ist dabei als 2/2-Wege-Magnetventil ausgebildet, das pneumatisch angesteuert werden kann. Die pneumatische Ansteuerung dieses Ventils 360 erfolgt jedoch nur dann, wenn sich das 3/2-Wege-Ventil 341 in seinem belüftenden Schaltzustand (nicht in Fig. 4 gezeigt) befindet.

Das als Umschaltventil arbeitende Ventil 362 hat einen ersten Arbeitseingang, der mittels einer Zweigleitung über die Leitung 334 gespeist wird sowie einen weiteren Eingang, der im Wesentlichen von dem Bistabilventil 344 mit Druckluft gespeist wird.

Mittels dieses Ventils 362 ist es somit möglich, die Federspeicherbremszylinder des Anhängers entweder über die erste Druckluftzufuhr 312 oder die zweite Druckluftzufuhr 336 entsprechend ansteuern zu können.

Folglich werden die Ventile 360, 362 gemäß ihrer Verschaltung mit dem 3/2-WegeVentil 341 gleichzeitig be- oder entlüftet in Abhängigkeit davon, ob das 3/2-Wege-Ventil 341 in seinem Belüftungs- oder Entlüftungszustand geschaltet ist.

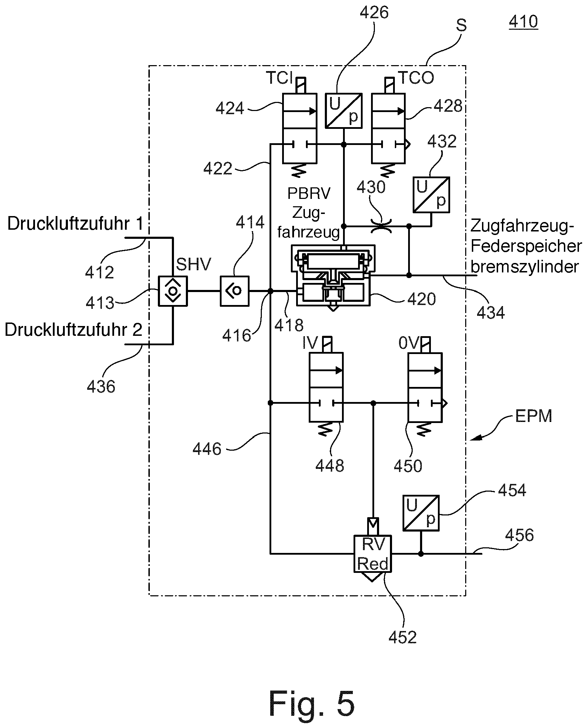

**Fig. 5** zeigt ein fünftes Ausführungsbeispiel einer Parkbremseinrichtung 410. Die Parkbremseinrichtung 410 ist dabei im Wesentlichen gleich wie das in Fig. 1a gezeigte erste Ausführungsbeispiel aufgebaut.

Vergleichbare Merkmale oder Elemente sind dabei mit demselben Bezugszeichen gekennzeichnet, das jedoch um den Wert 400 erhöht ist.

Beim Ausführungsbeispiel gemäß Fig. 5 fehlt lediglich das Relaisventil 44 für den Anhänger sowie die zugehörigen Steuerventile 40, 42 und die Rückkopplungsleitung zu dessen Steuereingang sowie der darin angeordnete Drucksensor 43 bzw. die Drossel 45 aus Fig. 1a.

Ferner weist das fünfte Ausführungsbeispiel lediglich ein Rückschlagventil 414 zur Absicherung der Ausgangsleitung 434 des Zugfahrzeug-Relaisventils 420 und der Redundanz-Ausgangsleitung 456 auf.

Bei dem in Fig. 5 gezeigten Ausführungsbeispiel einer Parkbremseinrichtung 410 handelt es sich um eine sog. «Rigid» Ausführung, die demzufolge keine Ansteuerungsmöglichkeit für einen Anhänger vorsieht.

Die Funktionalität des fünften Ausführungsbeispiels der Parkbremseinrichtung 410 entspricht folglich bezüglich des Zugfahrzeugs und des redundanten Bremssystems der entsprechenden Funktionalität des ersten Ausführungsbeispiels aus Fig. 1a für diese Baugruppen.

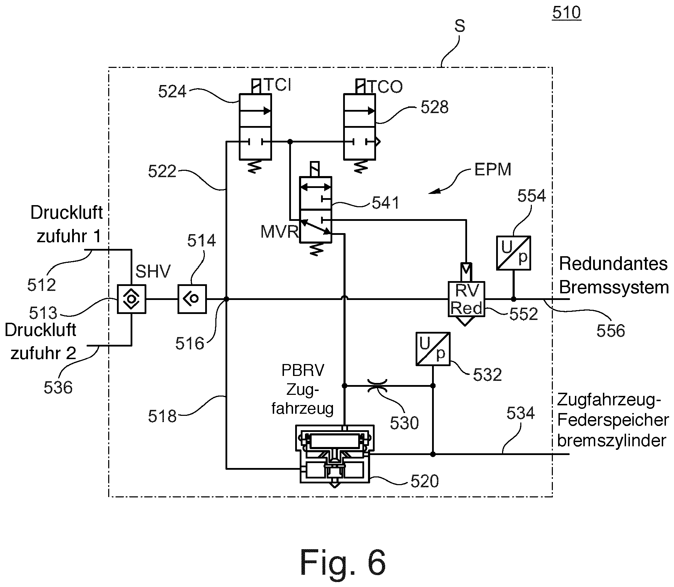

**Fig. 6** zeigt ein sechstes Ausführungsbeispiel einer erfindungsgemäßen Parkbremseinrichtung 510.

Die Parkbremseinrichtung 510 entspricht im Wesentlichen dem Ausführungsbeispiel gemäß Fig. 3, wobei die Anhängerbremssteuerung umfassend das Anhängerrelaisventil 244 mit der Rückkopplungsleitung zu dessen Steuereingang, die zugehörigen Steuerventile 240, 242 sowie den darin angeordneten Drucksensor 43 bzw. die Drossel 45 jeweils aus Fig. 3 fehlen.

Ferner weist das sechste Ausführungsbeispiel lediglich ein Rückschlagventil 514 zur Absicherung der Ausgangsleitung 534 des Zugfahrzeug-Relaisventils 420 und der Redundanz-Ausgangsleitung 556 auf.

Vergleichbare Merkmale sind mit einem im Vergleich zu Fig. 3 um den Wert 300 erhöhten Bezugszeichen versehen.

Bei dem in Fig. 6 gezeigten Ausführungsbeispiel der Parkbremseinrichtung 510 handelt es sich auch um eine «Rigid» Ausführung, die ebenfalls keine Ansteuerungsmöglichkeit für einen Anhänger vorsieht (verglichen zu dem dritten Ausführungsbeispiel gemäß Fig. 3).

Die Funktionalität des sechsten Ausführungsbeispiels der Parkbremseinrichtung 510 entspricht somit bezüglich des Zugfahrzeugs und des redundanten Bremssystems der entsprechenden Funktionalität des dritten Ausführungsbeispiels aus Fig. 3 für diese Baugruppen.

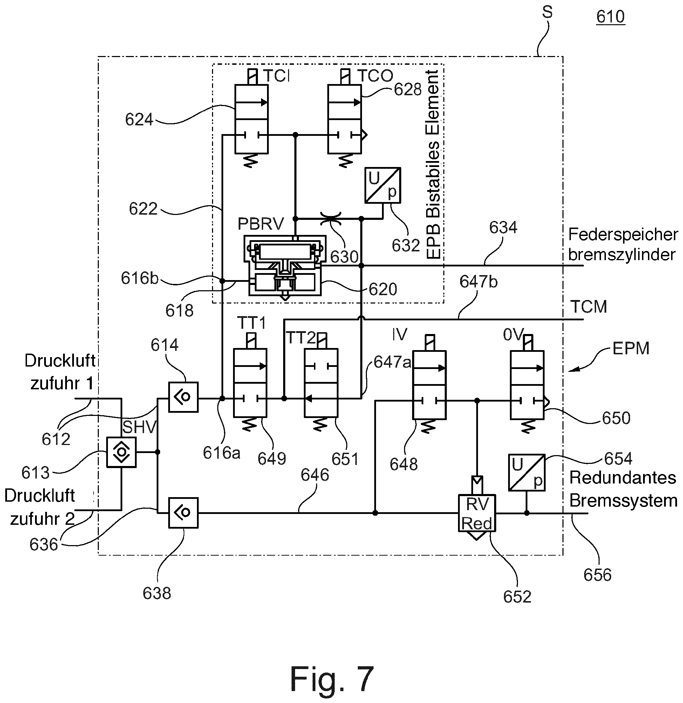

**Fig. 7** zeigt ein siebtes Ausführungsbeispiel einer erfindungsgemäßen Parkbremseinrichtung 610.

Die Parkbremseinrichtung 610 baut im Wesentlichen auf dem ersten Ausführungsbeispiel gemäß Fig. 1a auf, wobei eine Anhängerbremssteuerungseinheit umfassend das Anhängerrelaisventil 44 mit der Rückkopplungsleitung zu dessen Steuereingang, die zugehörigen Steuerventile 40, 42 sowie den Drucksensor 43 bzw. die Drossel 45 gemäß Fig. 1a fehlen.

Vergleichbare Merkmale sind mit einem im Vergleich zu Fig. 1a um den Wert 600 erhöhten Bezugszeichen versehen.

Verglichen zu dem ersten Ausführungsbeispiel weist das siebte Ausführungsbeispiel eine alternative Anhängerbremssteuerungseinheit auf.

Diese Einheit umfasst zwei Steuerventile 649, 651 (TT1, TT2) und eine Abzweigungsleitung 647a, die von dem Abzweigungspunkt 616a zwischen dem Rückschlagventil 614 und dem Relaisventil 620 für das Zugfahrzeug abzweigt und mit der Ausgangsleitung 634 dieses Relaisventils 620 verbunden ist.

Zwischen den beiden Steuerventilen 649, 651 zweigt eine weitere Ausgangsleitung 647b ab, die mit einem Anhängersteuermodul TCM (nicht in Fig. 7 gezeigt) zur Ansteuerung der Federspeicherbremszylinder eines Anhängers verbunden ist.

Das erste Steuerventil 649 ist als stromlos geschlossenes 2/2-Wege-Magnetventil ausgebildet, wohingegen das zweite Steuerventil 651 als stromlos offenes 2/2-Wege-Magnetventil ausgebildet ist.

Die Funktionalität des siebten Ausführungsbeispiels der Parkbremseinrichtung 610 entspricht folglich bezüglich des Zugfahrzeugs und des redundanten Bremssystems der entsprechenden Funktionalität des ersten Ausführungsbeispiels aus Fig. 1a für diese Baugruppen.

Bezüglich des Anhängers ist die Funktionalität des sechsten Ausführungsbeispiels der Parkbremseinrichtung 610 dabei wie folgt:
Bei nicht betätigten Steuerventilen 649, 651 wird die Ausgangsleitung 647b über die Ausgangsleitung 634 des Zugfahrzeug-Relaisventils 620 und die Abzweigungsleitung 647a angesteuert.

Somit erfolgt die Ansteuerung des Anhängersteuermoduls in gleicher Weise wie die Ansteuerung der Federspeicherbremszylinder des Zugfahrzeugs über das Relaisventil 620.

Die Steuerventile 649, 651 dienen zur Einstellung des sogenannten Trailer-Test-Zustandes, bei welchem durch Umschaltung der Steuerventile 649, 651 in die jeweilig nicht in Fig. 7 dargestellte Schaltstellung die Federspeicherbremszylinder des Zugfahrzeugs betätigt sind und die Federspeicherbremszylinder des Anhängers unbetätigt sind.

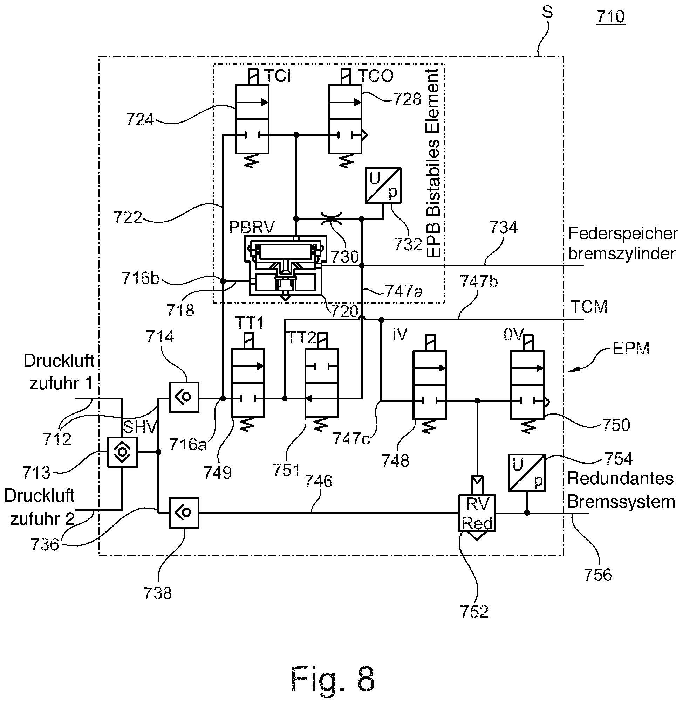

**Fig. 8** zeigt ein achtes Ausführungsbeispiel einer erfindungsgemäßen Parkbremseinrichtung 710.

Die Parkbremseinrichtung 710 baut im Wesentlichen auf dem siebten Ausführungsbeispiel gemäß Fig. 7 auf, wobei eine Steuerleitung 747c des Steuerventils 748 des elektropneumatischen Modulators EPM nicht von der Leitung 746 zwischen dem Rückschlagventil 738 und dem Redundanz-Relaisventil 752 abzweigt sondern von der Ausgangsleitung 747b für das Anhängersteuermodul abzweigt.

Vergleichbare Merkmale sind mit einem im Vergleich zu Fig. 7 um den Wert 100 erhöhten Bezugszeichen versehen.

Die Funktionalität des achten Ausführungsbeispiels der Parkbremseinrichtung 710 entspricht folglich bezüglich des Zugfahrzeugs und des Anhängers der entsprechenden Funktionalität des siebten Ausführungsbeispiels aus Fig. 7 für diese Baugruppen.

Lediglich die Ansteuerung des Steuerventils 748 des elektropneumatischen Modulators EPM unterscheidet sich dadurch, dass dieses Steuerventil 748 lediglich in Abhängigkeit des ausgesteuerten Druckes in der Ausgangsleitung 734 mit Druckluft versorgt wird.

Diese Art der Verschaltung ermöglicht eine zusätzliche redundante Ansteuerungsmöglichkeit des Steuerventils 748 bzw. des Redundanz-Relaisventils 752.

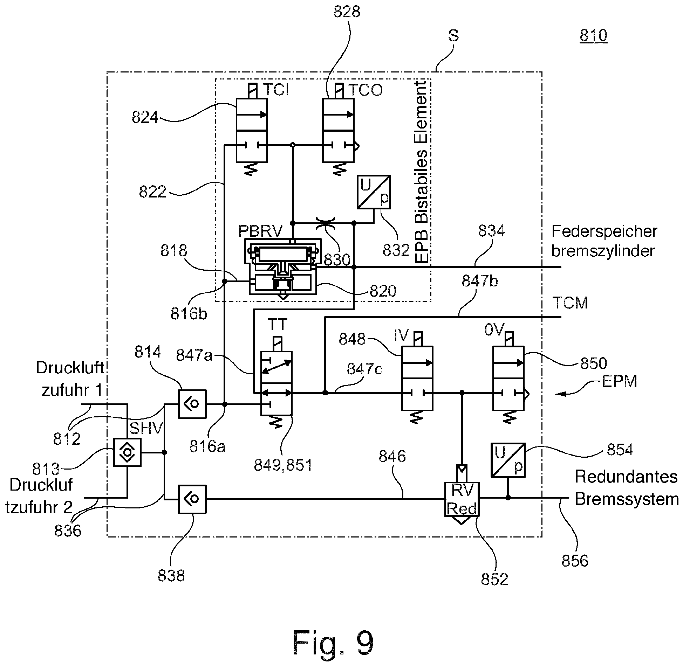

**Fig. 9** zeigt ein neuntes Ausführungsbeispiel einer erfindungsgemäßen Parkbremseinrichtung 810.

Die Parkbremseinrichtung 810 baut im Wesentlichen auf dem achten Ausführungsbeispiel gemäß Fig. 8 auf, wobei die beiden 2/2-Wege-Steuerventile 749, 751 aus Fig. 8 durch ein 3/2-Wege-Magnetvenil 849, 851 ersetzt wurden.

Vergleichbare Merkmale sind mit einem im Vergleich zu Fig. 8 um den Wert 100 erhöhten Bezugszeichen versehen.

Die Funktionalität des neunten Ausführungsbeispiels der Parkbremseinrichtung 810 entspricht dabei der entsprechenden Funktionalität des achten Ausführungsbeispiels aus Fig. 8.

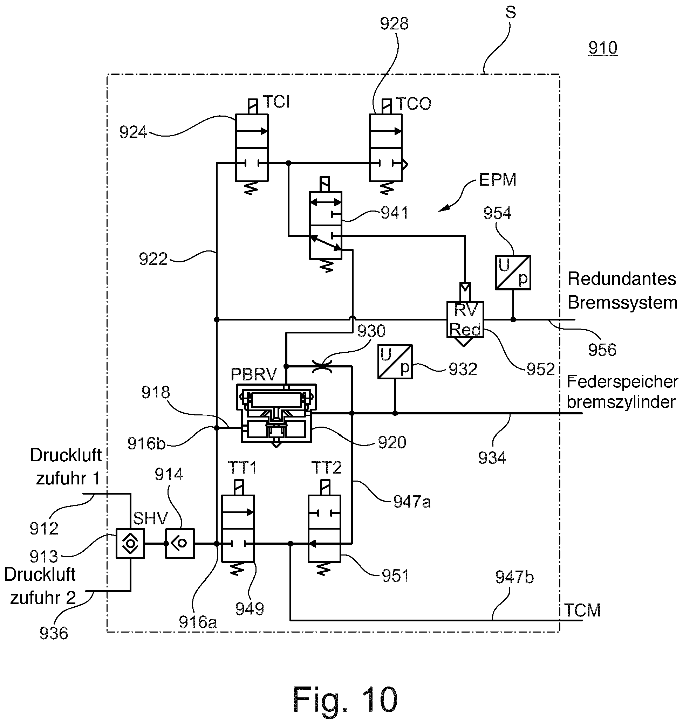

**Fig. 10** zeigt ein zehntes Ausführungsbeispiel einer erfindungsgemäßen Parkbremseinrichtung 910.

Die Parkbremseinrichtung 910 baut im Wesentlichen auf dem siebten Ausführungsbeispiel gemäß Fig. 7 auf, wobei der elektropneumatische Modulator EPM nicht wie in Fig. 7 von der Versorgungsleitung 636 bzw. 646 versorgt wird, sondern von einer eigenen Versorgungsleitung, die zwischen dem Abzweigungspunkt 916b und dem Steuerventil 924 abzweigt.

Diese Versorgungsleitung zweigt von der Steuerleitung 922 ab, die als solche für das Zugfahrzeug-Relaisventil 920 und für das Redundanz-Relaisventil 952 dient.

Demnach kann die zweite Versorgungsleitung 646 samt Rückschlagventil 638 aus dem siebten Ausführungsbeispiel gemäß Fig. 7 im zehnten Ausführungsbeispiel entfallen.

Zudem sind gemäß zehntem Ausführungsbeispiel beiden 2/2-Wege-Steuerventile 648, 650 des elektro-pneumatischen Modulators EPM (vgl. Fig. 7) durch ein 3/2-Wege-Magnetvenil 941 ersetzt worden.

Dieses 3/2-Wege-Magnetvenil 941 ist in der Steuerleitung zwischen den Steuerventilen 924, 928 und dem Relaisventil 920 angeordnet.

Von dem 3/2-Wege-Magnetvenil 941 zweigt eine weitere Steuerleitung zur Ansteuerung des Redundanz-Relaisventils 952 ab.

Die weiteren vergleichbaren Merkmale sind mit einem im Vergleich zu Fig. 7 um den Wert 300 erhöhten Bezugszeichen versehen.

Die Steuerventile 924 und 928 haben somit eine doppelte Steuerungsfunktionalität, da sie über das 3/2-Wege-Magnetventil 941 sowohl das Relaisventil 920 für das Zugfahrzeug als auch das Redundanz-Relaisventil 952 ansteuern.

Allerdings entscheidet die Schaltstellung des 3/2-Wege-Magnetventils 941, ob die Steuerventile 924, 928 das Relaisventil 920 für das Zugfahrzeug oder das Redundanz-Relaisventil 952 ansteuern.

Die Funktionalität des zehnten Ausführungsbeispiels der Parkbremseinrichtung 910 entspricht (in der in Fig. 10 gezeigten Schaltstellung des 3/2-Wege-Magnetventils 941) bezüglich des Zugfahrzeugs und des Anhängers der entsprechenden Funktionalität des siebten Ausführungsbeispiels aus Fig. 7 für diese Baugruppen.

Bei einer Störung und/oder eines (Teil-)Ausfalls eines elektronischen Bremssystems eines Nutzfahrzeugs kann das 3/2-Wege-Magnetventil 941 in die nicht in Fig. 10 gezeigte Schaltstellung umgeschaltet werden und ermöglicht so die Ansteuerung eines redundanten Bremssystems über die Steuerventile 924, 928 der Parkbremseinrichtung 910.

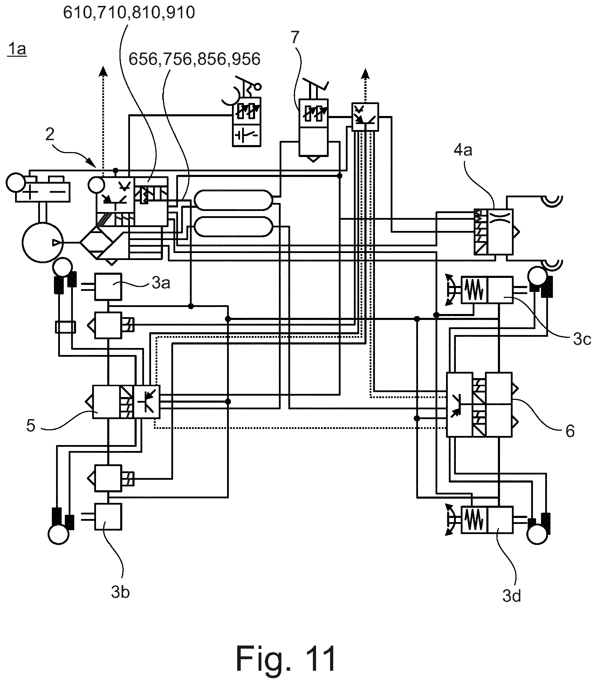

**Fig. 11** zeigt ein erstes Ausführungsbeispiel eines erfindungsgemäßen elektronischen Bremssystems 1a eines Nutzfahrzeugs mit einer erfindungsgemäßen Parkbremseinrichtung 610, 710, 810, 910 gemäß Fig. 7 bis 10.

Das Bremssystem 1a weist eine Luftaufbereitungseinheit 2 auf, das ferner die erfindungsgemäße Parkbremseinrichtung 610, 710, 810, 910 gemäß Fig. 7 bis 10 umfasst.

Allerdings ist es nicht notwendigerweise erforderlich, dass die Parkbremseinrichtung 610, 710, 810, 910 Bestandteil der Luftaufbereitungseinheit 2 ist.

Vielmehr kann die Parkbremseinrichtung 610, 710, 810, 910 auch als separate Einrichtung ausgeführt sein.

Die Parkbremseinrichtung 610, 710, 810, 910 ist über die Redundanz-Ausgangsleitung bzw. den Redundanz-Ausgangsanschluss 656, 756, 856, 956 direkt mit den Betriebsbremszylindern 3a, 3b der Vorderachse eines Nutzfahrzeugs über entsprechende Leitungen verbunden.

Zusätzlich oder alternativ ist die Parkbremseinrichtung 610, 710, 810, 910 über die Redundanz-Ausgangsleitung bzw. den Redundanz-Ausgangsanschluss 656, 756, 856, 956 mit den Betriebsbremszylindern 3c, 3d der Hinterachse eines Nutzfahrzeugs über entsprechende Leitungen verbunden.

Hierdurch wird eine denkbare Ausführungsform eines redundanten Bremssystems bereitgestellt, d.h. die bestehenden Betriebsbremszylinder an der Vorder- und/oder Hinterachse werden zusätzlich zur bestehenden Ansteuerung mit einer weiteren redundanten Ansteuerung versehen, wie vorstehend beschrieben.

Denkbar wäre grundsätzlich auch, noch zusätzliche Betriebsbremszylinder vorzusehen, die alternativ oder zusätzlich mit den Redundanz-Ausgangsanschlüssen verbunden bzw. an diese angeschlossen sind.

Alternativ oder zusätzlich ist es denkbar, dass die Parkbremseinrichtung 610, 710, 810, 910 lediglich über einen elektro-pneumatischen 1-Kanal-Modulator 5 der Vorderachse und/oder über einen elektro-pneumatischen 2-Kanal-Modulator 6 der Hinterachse mit den entsprechenden Betriebsbremszylindern 3a, 3b, 3c, 3d verbunden ist.

Das Bremssystem 1a weist weiter ein Anhängersteuermodul 4a auf, das mit der Parkbremseinrichtung 610, 710, 810, 910 verbunden ist.

Somit kann auf ein eigenes Anhänger-Relaisventil 44, 144, 244, 344 gemäß des ersten, zweiten, dritten und vierten Ausführungsbeispiels der Parkbremseinrichtung 10a, 10b, 110, 210, 310 verzichtet werden.

Alternativ ist es denkbar, auf das Anhängersteuermodul 4a zu verzichten und stattdessen die Parkbremseinrichtung 10a, 10b, 110, 210, 310 gemäß erstem, zweitem, drittem bzw. viertem Ausführungsbeispiel in dem Bremssystem 1a vorzusehen.

Weiter weist das elektronische Bremssystem 1a ein Fußbremsmodul 7 auf, das über einen Druckluftbehälter mit dem Luftaufbereitungsmodul 2 verbunden ist und weiter mit dem elektro-pneumatischen 1-Kanal-Modulator 5 und/oder dem elektro-pneumatischen 2-Kanal-Modulator 6 zur Ansteuerung der Betriebsbremszylinder 3a, 3b, 3c, 3d verbunden ist.

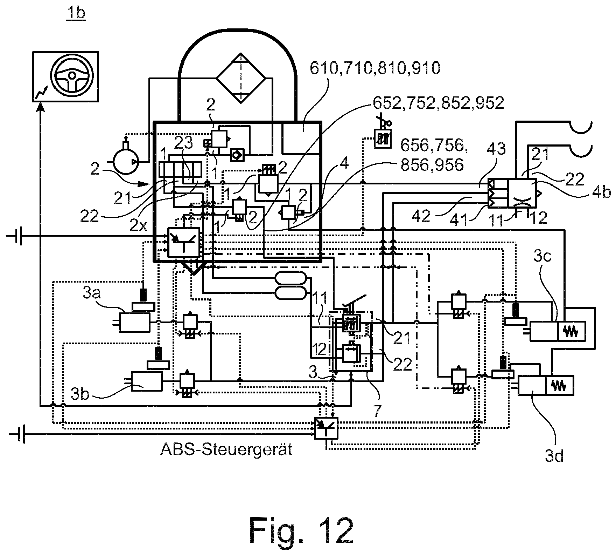

**Fig. 12** zeigt ein zweites Ausführungsbeispiel eines erfindungsgemäßen elektronischen Bremssystems 1b eines Nutzfahrzeugs mit einer erfindungsgemäßen Parkbremseinrichtung 610, 710, 810, 910 gemäß Fig. 7 bis 10.

Das Bremssystem 1b weist eine Luftaufbereitungseinheit 2 auf, das ferner die erfindungsgemäße Parkbremseinrichtung 610, 710, 810, 910 gemäß Fig. 7 bis 10 umfasst.

Allerdings ist es nicht notwendigerweise erforderlich, dass die Parkbremseinrichtung 610, 710, 810, 910 Bestandteil der Luftaufbereitungseinheit 2 ist.

Vielmehr kann die Parkbremseinrichtung 610, 710, 810, 910 auch als separate Einrichtung ausgeführt sein.

Der Fokus der Darstellung des zweiten Ausführungsbeispiels des Bremssystems 1b liegt darauf, darzustellen, wo das Redundanz-Relaisventil 652, 752, 852, 952 bezüglich der Parkbremseinrichtung 610, 710, 810, 910 im Bremssystem 1b angeordnet ist.

Gemäß Fig. 12 ist das Redundanz-Relaisventil 652, 752, 852, 952 in einer Luftaufbereitungseinheit 2 angeordnet, jedoch außerhalb der Parkbremseinrichtung 610, 710, 810, 910 vorgesehen.

Die Redundanz-Ausgangsleitung 656, 756, 856, 956 ist mit einem Fußbremsmodul 7 zur Ansteuerung der Betriebsbremszylindern 3a, 3b, 3c, 3d für die Vorder- und Hinterachse eines Nutzfahrzeugs über einen redundanten Drucklufteingang am Fußbremsmodul 7 verbunden.

Falls es sich bei dem Bremssystem 1b zukünftig um ein autonomes Bremssystem handelt, kann dieses Fußbremsmodul 7 entfallen und durch ein automatisches Druckregelmodul für die Vorder- und Hinterachse ersetzt werden, das über einen entsprechenden redundanten Drucklufteingang von der Redundanz-Ausgangsleitung 656, 756, 856, 956 versorgt wird.

Das Bremssystem 1a weist weiter ein Anhängersteuermodul 4b auf, das mit der Parkbremseinrichtung 610, 710, 810, 910 verbunden ist.

Somit kann auf ein eigenes Anhänger-Relaisventil 44, 144, 244, 344 gemäß des ersten, zweiten, dritten und vierten Ausführungsbeispiels der Parkbremseinrichtung 10a, 10b, 110, 210, 310 verzichtet werden.

Alternativ ist es denkbar, auf das Anhängersteuermodul 4 zu verzichten und stattdessen die Parkbremseinrichtung 10a, 10b, 110, 210, 310 gemäß erstem, zweitem, drittem bzw. viertem Ausführungsbeispiel in dem Bremssystem 1a vorzusehen.

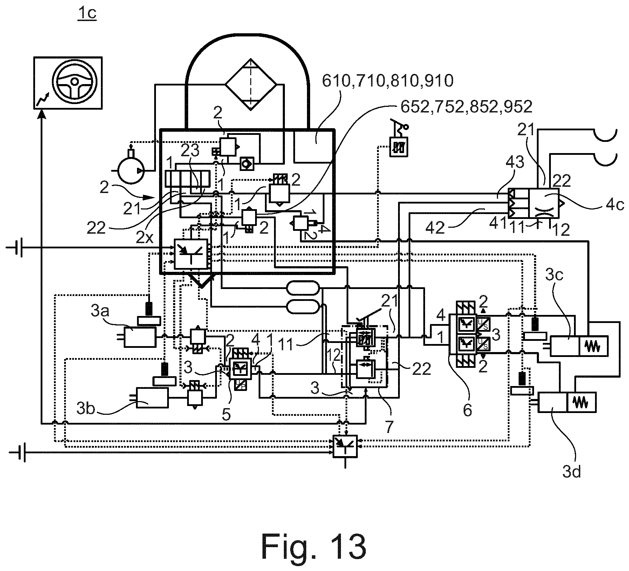

**Fig. 13** zeigt ein drittes Ausführungsbeispiel 1c eines erfindungsgemäßen elektronischen Bremssystems eines Nutzfahrzeugs mit einer erfindungsgemäßen Parkbremseinrichtung gemäß Fig. 7 bis 10.

Das dritte Ausführungsbeispiel 1c dieses Bremssystems baut im Wesentlichen auf dem zweiten Ausführungsbeispiel 1b des elektronischen Bremssystems auf, wobei dieses dritte Ausführungsbeispiel zusätzlich zwischen den Betriebsbremszylindern 3a, 3b der Vorderachse und dem Fußbremsmodul 7 einen elektro-pneumatischen 1-Kanal-Modulator 5 aufweist.

Weiter weist das dritte Ausführungsbeispiel zwischen den Bremszylindern 3c, 3d der Hinterachse und dem Fußbremsmodul 7 zusätzlich einen elektro-pneumatischen 2-Kanal-Modulator 6 auf.

Die weiteren Merkmale des dritten Ausführungsbeispiels 1c entsprechen im Wesentlichen dem zweiten Ausführungsbeispiel 1b.

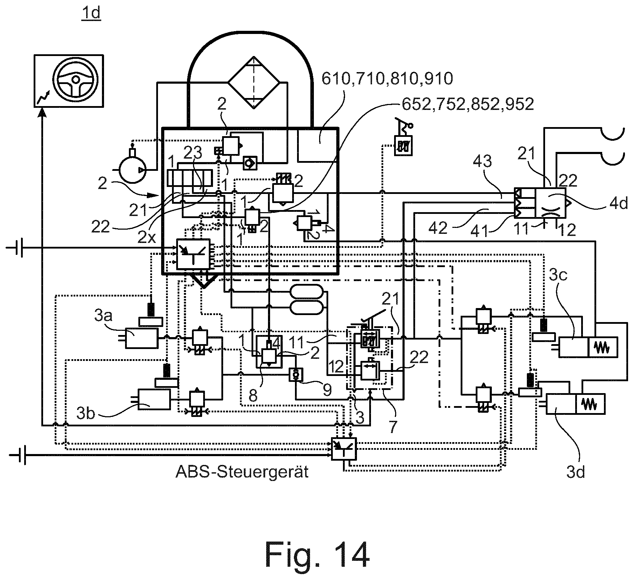

**Fig. 14** zeigt ein viertes Ausführungsbeispiel 1d eines erfindungsgemäßen elektronischen Bremssystems eines Nutzfahrzeugs mit einer erfindungsgemäßen Parkbremseinrichtung gemäß Fig. 7 bis 10.

Das vierte Ausführungsbeispiel dieses Bremssystems 1d baut im Wesentlichen auf dem zweiten Ausführungsbeispiel 1b des elektronischen Bremssystems auf, wobei das Redundanz-Relaisventil 652, 752, 852, 952 mit einem pneumatischen Steuereingang eines weiteren externen Redundanz-Relaisventils 8 verbunden ist.

Dieses Relaisventil 8 ist gemäß Fig. 14 außerhalb der Luftaufbereitungseinheit 2 angeordnet.

Dieses Relaisventil 8 ist weiter mittels seines Arbeitseingangs mit einem Betriebsbremskreis verbunden und über seinen Arbeitsausgang und über ein Select-High-Ventil 9 mit diesem Betriebsbremskreis rückgekoppelt.

Diese Rückkopplung erfolgt an dem Select-High-Ventil 9, das zwischen dem Fußbremsmodul 7 und den Betriebsbremszylindern 3a, 3b der Vorderachse in dem vorstehend genannten Betriebsbremskreis angeordnet ist.

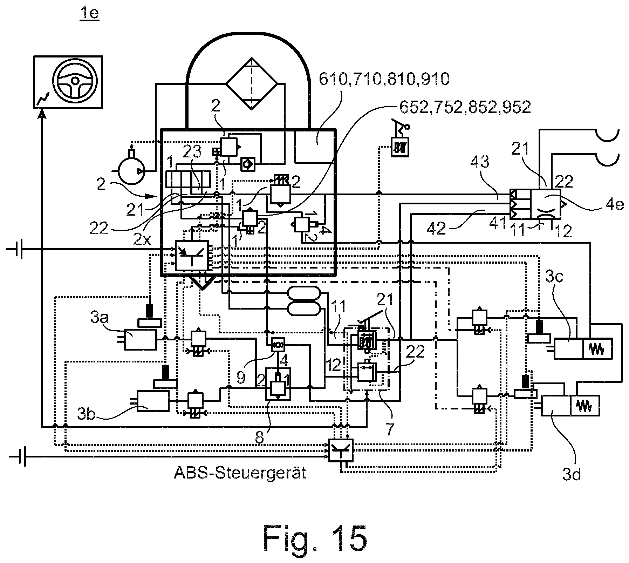

**Fig. 15** zeigt ein fünftes Ausführungsbeispiel eines erfindungsgemäßen elektronischen Bremssystems 1e eines Nutzfahrzeugs mit einer erfindungsgemäßen Parkbremseinrichtung gemäß Fig. 7 bis 10.

Das fünfte Ausführungsbeispiel dieses Bremssystems 1e baut im Wesentlichen auf dem vierten Ausführungsbeispiel des elektronischen Bremssystems 1d auf, wobei das weitere externe Redundanz-Relaisventil 8 von einer Versorgungsleitung, die stromaufwärts des Fußbremsmoduls 7 abzweigt, mit Druckluft versorgt wird und mit den beiden Betriebsbremszylindern 3a, 3b der Vorderachse verbunden ist.

Das Select-High-Ventil 9 ist gemäß fünftem Ausführungsbeispiel dieses Bremssystems 1e mit seinem Ausgang mit einem pneumatischen Steuereingang des externen Redundanz-Relaisventils 8 verbunden.

Dieses Relaisventil 8 ist gemäß Fig. 15 ebenfalls außerhalb der Luftaufbereitungseinheit 2 angeordnet.

Weiter ist ein erster Eingang des Select-High-Ventils 9 mit dem Redundanz-Relaisventil 652, 752, 852, 952 verbunden und ein zweiter Eingang des Select-High-Ventils 9 mit dem Arbeitsausgang des Fußbremsmoduls 7 verbunden.

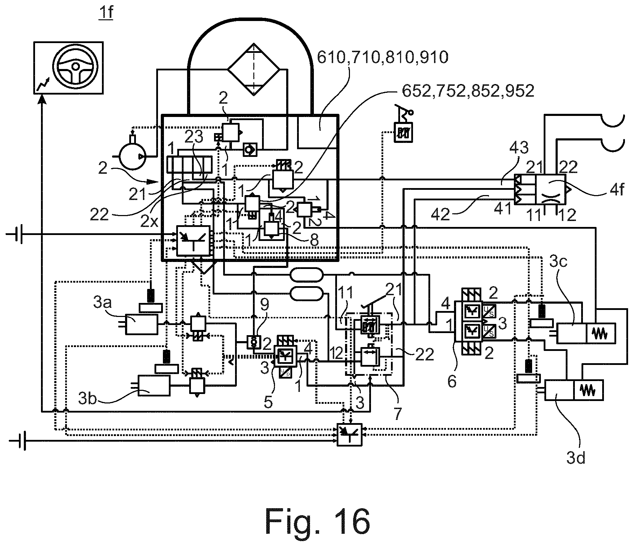

**Fig. 16** zeigt ein sechstes Ausführungsbeispiel eines erfindungsgemäßen elektronischen Bremssystems 1f eines Nutzfahrzeugs mit einer erfindungsgemäßen Parkbremseinrichtung gemäß Fig. 7 bis 10.

Dieses sechste Ausführungsbeispiel 1f baut im Wesentlichen auf dem dritten und vierten Ausführungsbeispiel des Bremssystems 1c, 1d auf, wobei im Gegensatz dazu das Select-High-Ventil 9 zwischen einem elektro-pneumatischen 1-Kanal-Modulator 5 und den Betriebsbremszylindern 3a, 3b einer Vorderachse des Nutzfahrzeugs angeordnet ist.

Demzufolge ist ein erster Eingang des Select-High-Ventils 9 mit dem Ausgang des elektro-pneumatischen 1-Kanal-Modulators 5 verbunden, wohingegen ein zweiter Eingang des Select-High-Ventils 9 mit dem weiteren Redundanz-Relaisventil 8 verbunden ist.

Dieses weitere Redundanz-Relaisventil 8 ist gemäß dem sechsten Ausführungsbeispiel 1f Bestandteil der Luftaufbereitungseinheit 2 und mit derselben Druckluftversorgungsleitung (eines Mehrkreisschutzventils) wie das Redundanz-Relaisventil 652, 752, 852, 952 verbunden.

Der Ausgang des Select-High-Ventils 9 ist gemäß Fig. 16 mit den beiden Betriebsbremszylindern 3a, 3b der Vorderachse eines Nutzfahrzeugs verbunden.

### BEZUGSZEICHENLISTE

- 1a: Elektronisches Bremssystem
- 1b: elektronisches Bremssystem
- 1c: elektronisches Bremssystem
- 1d: elektronisches Bremssystem
- 1e: elektronisches Bremssystem
- 1f: elektronisches Bremssystem
- 2: Luftaufbereitungseinheit
- 3a: Betriebsbremszylinder
- 3b: Betriebsbremszylinder
- 3c: Betriebsbremszylinder
- 3d: Betriebsbremszylinder
- 4a: Anhängersteuermodul
- 4b: Anhängersteuermodul
- 4c: Anhängersteuermodul
- 4d: Anhängersteuermodul
- 4e: Anhängersteuermodul
- 4f: Anhängersteuermodul
- 5: elektro-pneumatischer 1-Kanal-Modulator
- 6: elektro-pneumatischer 2-Kanal-Modulator
- 7: Fußbremsmodul
- 8: Redundanz-Relaisventil
- 9: Select-High-Ventil

- 10a: Parkbremseinrichtung
- 10b: Parkbremseinrichtung
- 12: Druckluftzufuhr bzw. Anschlussleitung
- 13: Select-High-Ventil
- 13a: Rückschlagventil
- 13b: Rückschlagventil
- 14: Rückschlagventil
- 16: Abzweigpunkt
- 18: Leitung
- 20: Bistabilventil
- 22: Steuerleitung
- 24: Steuerventil
- 26: Drucksensor
- 28: Steuerventil
- 30: Drossel
- 32: Drucksensor
- 34: Ausgangsleitung
- 36: Anschlussleitung
- 38: Rückschlagventil
- 40: Steuerventil
- 42: Steuerventil
- 43: Drucksensor
- 44: Bistabilventil
- 45: Drossel
- 46: Leitung
- 47: Anhänger-Ausgangsanschluss
- 48: Steuerventil
- 50: Steuerventil
- 52: Redundanz-Relaisventil
- 54: Drucksensor
- 56: Anschluss

- 110: Parkbremseinrichtung
- 112: Druckluftzufuhr
- 113: Select-High-Ventil114 Rückschlagventil
- 116: Abzweigpunkt
- 118: Leitung
- 120: Bistabilventil
- 122: Steuerleitung
- 124: Steuerventil
- 126: Drucksensor
- 128: Steuerventil
- 130: Drossel
- 132: Drucksensor
- 134: Ausgangsleitung
- 136: Anschlussleitung
- 138: Rückschlagventil
- 140: Steuerventil
- 141: 3/2-Wege-Magnet-Steuerventil
- 142: Steuerventil
- 143: Drucksensor
- 144: Bistabilventil
- 145: Drossel
- 146: Leitung
- 147: Anhänger-Ausgangsanschluss
- 152: Redundanz-Relaisventil
- 154: Drucksensor
- 156: Anschluss

- 210: Parkbremseinrichtung
- 212: Druckluftzufuhr
- 213: Select-High-Ventil
- 214: Rückschlagventil
- 216: Abzweigpunkt
- 218: Leitung
- 220: Bistabilventil
- 222: Steuerleitung
- 224: Steuerventil
- 228: Steuerventil
- 230: Drossel
- 232: Drucksensor
- 234: Ausgangsleitung
- 236: Anschlussleitung
- 238: Rückschlagventil
- 240: Steuerventil
- 241: 3/2-Wege-Magnetsteuerventil
- 242: Steuerventil
- 243: Drucksensor244 Bistabilventil
- 245: Drossel
- 246: Leitung
- 247: Anhänger-Ausgangsanschluss
- 252: Redundanz-Relaisventil
- 254: Drucksensor
- 256: Anschluss
- 260: Drucksensor

- 310: Parkbremseinrichtung
- 312: Druckluftzufuhr
- 313: Select-High-Ventil
- 314: Rückschlagventil
- 316: Abzweigpunkt
- 318: Leitung
- 320: Bistabilventil
- 322: Steuerleitung
- 324: Steuerventil
- 326: Drucksensor
- 328: Steuerventil
- 330: Drossel
- 332: Drucksensor
- 334: Ausgangsleitung
- 336: Anschlussleitung
- 338: Rückschlagventil
- 340: Steuerventil
- 341: 3/2-Wege-Magnet-Steuerventil
- 342: Steuerventil
- 343: Drucksensor
- 344: Bistabilventil
- 345: Drossel
- 346: Leitung
- 347: Anhänger-Ausgangsanschluss
- 356: Anschluss
- 360: Ventil
- 362: Ventil

- 410: Parkbremseinrichtung
- 412: Druckluftzufuhr
- 413: Select-High-Ventil
- 414: Rückschlagventil
- 416: Abzweigpunkt
- 418: Leitung
- 420: Bistabilventil
- 422: Steuerleitung
- 424: Steuerventil
- 426: Drucksensor
- 428: Steuerventil
- 430: Drossel
- 432: Drucksensor
- 434: Ausgangsleitung
- 436: Anschlussleitung
- 446: Leitung
- 448: Steuerventil
- 450: Steuerventil
- 452: Redundanz-Relaisventil
- 454: Drucksensor
- 456: Anschluss

- 510: Parkbremseinrichtung
- 512: Druckluftzufuhr
- 513: Select-High-Ventil
- 514: Rückschlagventil
- 516: Abzweigpunkt
- 518: Leitung
- 520: Bistabilventil
- 522: Steuerleitung
- 524: Steuerventil
- 528: Steuerventil
- 530: Drossel
- 532: Drucksensor
- 534: Ausgangsleitung
- 536: Anschlussleitung
- 546: Leitung
- 548: Steuerventil
- 550: Steuerventil
- 552: Redundanz-Relaisventil
- 554: Drucksensor
- 556: Anschluss

- 610: Parkbremseinrichtung
- 612: Druckluftzufuhr
- 613: Select-High-Ventil
- 614: Rückschlagventil
- 616a: Abzweigpunkt
- 616b: Abzweigpunkt
- 618: Leitung
- 620: Bistabilventil
- 622: Steuerleitung
- 624: Steuerventil
- 628: Steuerventil
- 630: Drossel
- 632: Drucksensor
- 634: Ausgangsleitung
- 636: Anschlussleitung
- 638: Rückschlagventil
- 646: Leitung
- 647a: Abzweigungsleitung
- 647b: weitere Ausgangsleitung
- 648: Steuerventil
- 649: Steuerventil
- 650: Steuerventil
- 651: Steuerventil
- 652: Redundanz-Relaisventil
- 654: Drucksensor
- 656: Anschluss

- 710: Parkbremseinrichtung
- 712: Druckluftzufuhr
- 713: Select-High-Ventil
- 714: Rückschlagventil
- 716a: Abzweigpunkt
- 716b: Abzweigpunkt
- 718: Leitung
- 720: Bistabilventil
- 722: Steuerleitung
- 724: Steuerventil
- 728: Steuerventil
- 730: Drossel
- 732: Drucksensor
- 734: Ausgangsleitung
- 736: Anschlussleitung
- 738: Rückschlagventil
- 746: Leitung
- 747a: Abzweigungsleitung
- 747b: weitere Ausgangsleitung
- 747c: Steuerleitung
- 748: Steuerventil
- 749: Steuerventil
- 750: Steuerventil
- 751: Steuerventil
- 752: Redundanz-Relaisventil
- 754: Drucksensor
- 756: Anschluss

- 810: Parkbremseinrichtung
- 812: Druckluftzufuhr
- 813: Select-High-Ventil
- 814: Rückschlagventil
- 816a: Abzweigpunkt
- 816b: Abzweigpunkt
- 818: Leitung
- 820: Bistabilventil
- 822: Steuerleitung
- 824: Steuerventil
- 828: Steuerventil
- 830: Drossel
- 832: Drucksensor
- 834: Ausgangsleitung
- 836: Anschlussleitung
- 838: Rückschlagventil
- 846: Leitung
- 847a: Abzweigungsleitung
- 847b: weitere Ausgangsleitung
- 847c: Steuerleitung
- 848: Steuerventil
- 849: 3/2-Wege-Magnet-Steuerventil
- 850: Steuerventil
- 851: 3/2-Wege-Magnet-Steuerventil
- 852: Redundanz-Relaisventil
- 854: Drucksensor
- 856: Anschluss
- 910: Parkbremseinrichtung
- 912: Druckluftzufuhr
- 913: Select-High-Ventil
- 914: Rückschlagventil
- 916a: Abzweigpunkt
- 916b: Abzweigpunkt
- 918: Leitung
- 920: Bistabilventil
- 922: Steuerleitung
- 924: Steuerventil
- 928: Steuerventil
- 930: Drossel
- 932: Drucksensor
- 934: Ausgangsleitung
- 936: Anschlussleitung
- 941: 3/2-Wege-Magnet-Steuerventil
- 947a: Abzweigungsleitung
- 947b: weitere Ausgangsleitung
- 949: Steuerventil
- 951: Steuerventil
- 952: Redundanz-Relaisventil_
- 954: Drucksensor
- 956: Anschluss

- S: Systemgrenze
- EPM: Elektro-pneumatischer Modulator

## Patentansprüche

1. Parkbremseinrichtung (10, 110, 210, 310, 410, 510, 610, 710, 810, 910) mit wenigstens einer ersten Anschlussleitung (12, 112, 212, 312, 412, 512, 612, 712, 812, 912) an eine Druckluftquelle und mit wenigstens einer zweiten Anschlussleitung (36, 136, 236, 336, 436, 536, 636, 736, 836, 936) an eine Druckluftquelle, mit wenigstens einer ersten Druckluftausgangsleitung (34, 134, 234, 334, 434, 534, 634, 734, 834, 934) zum direkten und/oder indirekten Anschluss an einen Federspeicherbremszylinder, und mit wenigstens einer weiteren Redundanz-Druckluftausgangsleitung (56, 156, 256, 356, 456, 556, 656, 756, 856, 956) zum direkten und/oder indirekten Anschluss an ein redundantes Bremssystem, wobei stromaufwärts der Redundanz-Druckluftausgangsleitung (56, 156, 256, 456, 556, 656, 756, 856, 956) zur Steuerung der Redundanz-Druckluftausgangsleitung ein Relaisventil (52, 152, 252, 452, 552, 652, 752, 852, 952) vorgesehen ist, wobei das Relaisventil (52, 152, 252, 452, 552, 652, 752, 852, 952) als Bistabilventil (52, 152, 252, 452, 552, 652, 752, 852, 952) ausgebildet ist und einen pneumatischen Steuereingang aufweist, wobei der pneumatische Steuereingang eine Zuleitung aufweist, in der wenigstens ein Steuerventil (48, 140, 224, 340, 448, 524, 648, 748, 848, 924) vorgesehen ist,
**dadurch gekennzeichnet, dass**
zwischen Steuerventil (48, 140, 224, 340, 448, 524, 648, 748, 848, 924) und Steuereingang eine Entlüftungsleitung abzweigt.

2. Parkbremseinrichtung (10, 110, 210, 310, 410, 510, 610, 710, 810, 910) nach Anspruch 1,
**dadurch gekennzeichnet, dass**
die Redundanz-Druckluftausgangsleitung (56, 156, 256, 356, 456, 556, 656, 756, 856, 956) über die zweite Anschlussleitung (36, 136, 236, 336, 436, 536, 636, 736, 836, 936) durch eine Druckluftquelle mit Druckluft versorgbar ist bzw. im Betriebszustand versorgt werden kann.

3. Parkbremseinrichtung (10, 110, 210, 410, 510, 610, 710, 810, 910) nach einem der vorhergehenden Ansprüche,
**dadurch gekennzeichnet, dass**
das Steuerventil ein 2/2-Wege-Ventil (48, 140, 224, 340, 448, 524, 648, 748, 848, 924) ist.

4. Parkbremseinrichtung (10, 110, 210, 410, 510, 610, 710, 810, 910) nach einem der vorhergehenden Ansprüche,
**dadurch gekennzeichnet, dass**
in der Entlüftungsleitung ein weiteres Steuerventil (50, 142, 228, 342, 450, 528, 650, 750, 850, 928) vorgesehen ist.

5. Parkbremseinrichtung (10, 110, 210, 310, 410, 510, 610, 710, 810, 910) nach Anspruch 4,
**dadurch gekennzeichnet, dass**
das weitere Steuerventil ein 2/2-Wege-Ventil (50, 142, 228, 342, 450, 528, 650, 750, 850, 928) ist.

6. Parkbremseinrichtung (10, 110, 210, 410, 510, 610, 710, 810, 910) nach Anspruch 5,
**dadurch gekennzeichnet, dass**
das weitere Steuerventil (50, 142, 228, 342, 450, 528, 650, 750, 850, 928) an einen Luftablass angeschlossen und/oder ein Luftablassventil ist.

7. Parkbremseinrichtung (10, 110, 210, 410, 510, 610, 710, 810, 910) nach einem der vorhergehenden Ansprüche,
**dadurch gekennzeichnet, dass**
zwischen Steuerventil (140, 224, 548, 924) und Steuereingang ein 3/2-Wege-Ventil (141, 241, 541, 941) vorgesehen ist, dessen eine Ausgangsleitung mit einem Steuereingang verbunden ist und dessen andere Ausgangsleitung mit einem Steuereingang eines Bistabilventils (144, 220, 520, 920) verbunden ist.

8. Parkbremseinrichtung (10, 110, 210, 310, 410, 510, 610, 710, 810, 910) nach einem der vorhergehenden Ansprüche,
**dadurch gekennzeichnet, dass**
die Parkbremseinrichtung (10, 110, 210, 310, 410, 510, 610, 710, 810, 910) wenigstens einen weiteren Druckluftausgang (47, 147, 247, 347, 474, 547, 647, 747a, 847, 947) zum Anschluss an ein Anhängersteuermodul und/oder zum Anschluss an wenigstens einen Federspeicherbremszylinder eines Anhängers aufweist.

9. Parkbremseinrichtung (10, 110, 210, 310, 410, 510, 610, 710, 810, 910) nach Anspruch 8,
**dadurch gekennzeichnet, dass**
stromaufwärts des weiteren Druckluftausgangs (47, 147, 247, 347, 547) zum Anschluss an ein Anhängersteuermodul und/oder zum Anschluss an wenigstens einen Federspeicherbremszylinder eines Anhängers ein Bistabilventil (44, 144, 244, 344, 544, 620, 720, 820, 920) vorgesehen ist.

10. Parkbremseinrichtung (310) nach Anspruch 9,
**dadurch gekennzeichnet, dass**
stromaufwärts des Steuerventils (340) eine Steuerleitung abzweigt, in der das 3/2-Wege-Ventil (341) angeordnet ist, welches mit einem pneumatischen Steuereingang eines dritten Steuerventils (360) verbunden ist, das in der Redundanz-Ausgangsleitung (356) angeordnet ist sowie mit einem pneumatischen Steuereingang eines vierten Steuerventils (362) verbunden ist, das zwischen dem Bistabilventil (344) und dem weiteren Druckluftausgang (347) angeordnet ist.

## Claims

1. A parking brake device (10, 110, 210, 310, 410, 510, 610, 710, 810, 910) having at least one first connecting line (12, 112, 212, 312, 412, 512, 612, 712, 812, 912) to a compressed-air source and at least one second connecting line (36, 136, 236, 336, 436, 536, 636, 736, 836, 936) to a compressed-air source, having at least one first compressed-air output line (34, 134, 234, 334, 434, 534, 634, 734, 834, 934) for connecting directly and/or indirectly to a spring brake cylinder, and having at least one further redundancy compressed-air output line (56, 156, 256, 356, 456, 556, 656, 756, 856, 956) for connecting directly and/or indirectly to a redundant brake system, there being provided upstream of the redundancy compressed-air output line (56, 156, 256, 456, 556, 656, 756, 856, 956) a relay valve (52, 152, 252, 452, 552, 652, 752, 852, 952) for controlling the redundancy compressed-air output line, this relay valve (52, 152, 252, 452, 552, 652, 752, 852, 952) being configured as a bistable valve (52, 152, 252, 452, 552, 652, 752, 852, 952) and having a pneumatic control input, this pneumatic control input having a supply line in which at least one control valve (48, 140, 224, 340, 448, 524, 648, 748, 848, 924) is provided,
**characterised in that**
a vent line branches off between the control valve (48, 140, 224, 340, 448, 524, 648, 748, 848, 924) and the control input.

2. A parking brake device (10, 110, 210, 310, 410, 510, 610, 710, 810, 910) according to claim 1,
**characterised in that**
the redundancy compressed-air output line (56, 156, 256, 356, 456, 556, 656, 756, 856, 956) can be supplied or is supplied during operation with compressed air by a compressed-air source via the second connecting line (36, 136, 236, 336, 436, 536, 646, 736, 826, 936).

3. A parking brake device (10, 110, 210, 410, 510, 610, 710, 810, 910) according to any one of the preceding claims,
**characterised in that**
the control valve is a 2/2-way valve (48, 140, 224, 340, 448, 524, 648, 748, 848, 924).

4. A parking brake device (10, 110, 210, 410, 510, 610, 710, 810, 910) according to any one of the preceding claims,
**characterised in that**
a further control valve (50, 142, 228, 342, 450, 528, 650, 750, 850, 928) is provided in the vent line.

5. A parking brake device (10, 110, 210, 310, 410, 510, 610, 710, 810, 910) according to claim 4,
**characterised in that**
the further control valve is a 2/2-way valve (50, 142, 228, 342, 450, 528, 650, 750, 850, 928).

6. A parking brake device (10, 110, 210, 410, 510, 610, 710, 810, 910) according to claim 5,
**characterised in that**
the further control valve (50, 142, 228, 342, 450, 528, 650, 750, 850, 928) is connected to an air vent and/or is an air vent valve.

7. A parking brake device (10, 110, 210, 410, 510, 610, 710, 810, 910) according to any one of the preceding claims,
**characterised in that**
provided between the control valve (140, 224, 548, 924) and the control input is a 3.2-way valve (141, 241, 541 941) having one output line that is connected to a control input and another output line that is connected to a control input of a bistable valve (144, 220, 520, 920).

8. A parking brake device (10, 110, 210, 310, 410, 510, 610, 710, 810, 910) according to any one of the preceding claims,
**characterised in that**
the parking brake device (10, 110, 210, 310, 410, 510, 610, 710, 810, 910) has at least one further compressed-air output (47, 147, 247, 347, 447, 547, 647, 747a, 847, 947) for connecting to a trailer control module and/or for connecting to at least one spring brake cylinder of a trailer.

9. A parking brake device (10, 110, 210, 310, 410, 510, 610, 710, 810, 910) according to claim 8,
**characterised in that**
provided upstream of the further compressed-air output (47, 147, 247, 347, 547) for connecting to a trailer control module and/or for connection to at least one spring brake cylinder of a trailer is a bistable valve (44, 144, 244, 344, 544, 620 720, 820, 920).

10. A parking brake device (310) according to claim 9,
**characterised in that**
branching off upstream of the control valve (340) is a control line and that arranged in this control line is the 3/2-way valve (341) that is connected to a pneumatic control input of a third control valve (360), which is in turn arranged in the redundant output line (356), and connected to a pneumatic control input of a fourth control valve (362), which is in turn arranged between the bistable valve (344) and the further compressed-air output (347).

## Revendications

1. Dispositif (10, 110, 210, 310, 410, 510, 610, 710, 810, 910) de frein de stationnement comprenant au moins un premier conduit (12, 112, 212, 312, 412, 512, 612, 712, 812, 912) de raccordement à une source d'air comprimé et comprenant au moins un deuxième conduit (36, 136, 236, 336, 436, 536, 636, 736, 836, 936) de raccordement à une source d'air comprimé, comprenant au moins un premier conduit (34, 134, 234, 334, 434, 534, 634, 734, 834, 934) de sortie d'air comprimé pour le raccordement direct ou indirect à un cylindre de frein à ressort accumulateur et comprenant au moins un autre conduit (56, 156, 256, 356, 456, 556, 656, 756, 856, 956) de sortie d'air comprimé redondant pour le raccordement direct et/ou indirect à un système de frein redondant, dans lequel, en amont du conduit (56, 156, 256, 456, 556, 656, 756, 856, 956) de sortie d'air comprimé redondant, il est prévu, pour la commande du conduit de sortie d'air comprimé redondant, une vanne (52, 152, 252, 452, 552, 652, 752, 852, 952) relais, dans lequel la vanne (52, 152, 252, 452, 552, 652, 752, 852, 952) relais est constituée sous la forme d'une vanne (52, 152, 252, 452, 552, 652, 752, 852, 952) bistable et a une entrée pneumatique de commande, dans lequel l'entrée pneumatique de commande a un conduit d'amenée, dans lequel il est prévu au moins une soupape (48, 140, 224, 340, 448, 524, 648, 748, 848, 924) de commande,
**caractérisé en ce qu'**
un conduit de purge bifurque entre la soupape (48, 140, 224, 340, 448, 524, 648, 748, 848, 924) de commande et l'entrée de commande.

2. Dispositif (10, 110, 210, 310, 410, 510, 610, 710, 810, 910) de frein de stationnement suivant la revendication 1,
**caractérisé en ce que**
le conduit (56, 156, 256, 356, 456, 556, 656, 756, 856, 956) de sortie d'air comprimé redondant peut être alimenté ou est alimenté dans l'état de fonctionnement en air comprimé par une source d'air comprimé, en passant par le deuxième conduit (36, 136, 236, 336, 436, 536, 636, 736, 836, 936) de raccordement.

3. Dispositif (10, 110, 210, 410, 510, 610, 710, 810, 910) de frein de stationnement suivant l'une des revendications précédentes,
**caractérisé en ce que**
la soupape de commande est une soupape (48, 140, 224, 340, 448, 524, 648, 748, 848, 924) à 2/2 voies.

4. Dispositif (10, 110, 210, 410, 510, 610, 710, 810, 910) de frein de stationnement suivant l'une des revendications précédentes,
**caractérisé en ce que**
une autre soupape (50, 142, 228, 342, 450, 528, 650, 750, 850, 928) de commande est prévue dans le conduit de purge.

5. Dispositif (10, 110, 210, 310, 410, 510, 610, 710, 810, 910) de frein de stationnement suivant la revendication 4,
**caractérisé en ce que**
l'autre soupape de commande est une soupape (50, 142, 228, 342, 450, 528, 650, 750, 850, 928) à 2/2 voies.

6. Dispositif (10, 110, 210, 410, 510, 610, 710, 810, 910) de frein de stationnement suivant la revendication 5,
**caractérisé en ce que**
l'autre soupape (50, 142, 228, 342, 450, 528, 650, 750, 850, 928) de commande est raccordée à une évacuation d'air et/ou à une soupape d'évacuation d'air.

7. Dispositif (10, 110, 210, 410, 510, 610, 710, 810, 910) de frein de stationnement suivant l'une des revendications précédentes,
**caractérisé en ce qu'**
il est prévu, entre la soupape (140, 224, 548, 924) de commande et l'entrée de commande, une soupape (141, 241, 541, 941) à 3/2 voies, dont un conduit de sortie communique avec une entrée de commande et dont un autre conduit de sortie communique avec une entrée de commande d'une soupape (144, 220, 520, 920) bistable.

8. Dispositif (10, 110, 210, 310, 410, 510, 610, 710, 810, 910) de frein de stationnement suivant l'une des revendications précédentes,
**caractérisé en ce que**
le dispositif (10, 110, 210, 310, 410, 510, 610, 710, 810, 910) de frein de stationnement a au moins une autre sortie (47, 147, 247, 347, 474, 547, 647, 747a, 847, 947) d'air comprimé pour le raccordement à un module de commande de remorque et/ou pour le raccordement à au moins un cylindre de frein à ressort accumulateur d'une remorque.

9. Dispositif (10, 110, 210, 310, 410, 510, 610, 710, 810, 910) de frein de stationnement suivant la revendication 8,
**caractérisé en ce qu'**
en amont de l'autre sortie (47, 147, 247, 347, 547) d'air comprimé, il est prévu une soupape (44, 144, 244, 344, 544, 620, 720, 820, 920) bistable pour le raccordement à un module de commande de remorque et/ou pour le raccordement à au moins un cylindre de frein à ressort accumulateur d'une remorque.

10. Dispositif (310) de frein de stationnement suivant la revendication 9,
**caractérisé en ce qu'**
en amont de la soupape (340) de commande bifurque un conduit de commande, sur lequel est montée la soupape (341) à 3/2 voies, qui communique avec une entrée pneumatique de commande d'une troisième soupape (360) de commande, qui est montée dans le conduit (356) de sortie redondant, ainsi qu'avec une entrée pneumatique de commande d'une quatrième soupape (362) de commande, qui est montée entre la soupape (344) bistable et l'autre sortie (347) d'air comprimé.
